# EUROPÄISCHE PATENTSCHRIFT

(11) **EP 2 447 576 B1**
(45) Veröffentlichungstag und Bekanntmachung des Hinweises auf die Patenterteilung: **04.09.2013**
(21) Anmeldenummer: 12000313.2
(22) Anmeldetag: 11.03.2010
(51) Int. Cl.: F16H 57/04

(54) **Getriebe**
Gearbox
Engrenage

(30) Priorität: 25.03.2009 DE 102009014316
(43) Veröffentlichungstag der Anmeldung: 02.05.2012
(62) Teilanmeldung aus: 10710202.2
(73) Patentinhaber: Sew-Eurodrive GmbH & Co. KG, 76646 Bruchsal (DE)
(72) Erfinder: Strauß, Dietmar, 76703 Kraichtal (DE); Schütterle, Ingo, 72488 Sigmaringen (DE)
(74) Vertreter: Tüngler, Eberhard

(56) Entgegenhaltungen:
- EP-A2- 0 853 225
- DE-A1- 4 132 780
- DE-B- 1 291 966
- DE-U- 1 720 409
- DE-U- 1 989 640
- GB-A- 757 480
- GB-A- 1 426 352
- JP-A- 7 217 725
- US-A- 1 143 307
- US-B1- 6 997 284

## Beschreibung

Die Erfindung betrifft ein Getriebe.

Es ist bekannt, dass Getriebe mit Öl-Schmierung ausführbar sind, wobei das Öl, also Flüssigkeit, bei Nicht-Betrieb des Getriebes, also ruhenden Zahnrädern, sich im unteren Teil des Getriebeinneren sammelt und dort den Ölsumpf bildet, der einen Ölstand aufweist, welcher der Füllhöhe beim Einfüllen des Öls entspricht. Bei Betrieb des Getriebes, insbesondere bei Nenndrehzahl der Eintriebswelle und/oder Abtriebswelle spritzen und schleudern die Verzahnungsteile des Getriebes Öl herum. Insbesondere wird auch von den miteinander im Eingriff stehenden Verzahnungen Öl herausgespritzt.

Aus der gattungsgemäßen DE 41 32 780 A1 ist eine Zahnradpaarung bekannt, bel dem Schmieröl abgeleitet wird über eine Sammelrinne.

Aus der DE 12 91 966 B Ist eine Schmlervorrichtung für ein Zahnradgetriebe im Anfahrzustand bekannt.

Aus der US 1 143 307 A ist ein Schmiermechanismus bekannt, bei dem Schmleröl von einem Zahnrad eines Getriebes abgeleitet wird.

Der Erfindung liegt daher die Aufgabe zugrunde, ein Getriebe weiterzubilden, wobei möglichst viel Leistung pro Bauvolumen übertragbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe sind, dass eine Öl-Abstreifvorrichtung an der Stirnseite eines drehbar gelagerten Zahnrades angeordnet, insbesondere an einem planen Bereich der Stirnseite eines Zahnrades.

Von Vorteil ist dabei, dass an der Stirnseite anhaftendes Öl abstreifbar ist und die kinetische Energie des Öls nutzbar machbar ist. Denn das Abstreifen von Öl ist passiv ausführbar, also ohne zusätzliche Energiequelle. Die entstehende Verlustleistung in Form von Reibleistung ist äußerst gering, wenn das Zahnrad in einem industriell verwendbaren Getriebe mit einer Nennleistung von mehr als 10 Watt angeordnet ist. Die Nutzbarmachung der kinetischen Energie ist in verschiedenen Weisen möglich. Einerseits kann auf diese Weise ein Befördern von Öl zu Kühlzwecken bewirkt werden, andererseits ist auch das Öl in die Höhe beförderbar, also potentielle Energie dem Öl zuführbar, zum Zwischenspeichern in einem Zwischenspeicher zur Absenkung des Ölstandes während des Betriebs.

Bei einer vorteilhaften Ausgestaltung umfasst die Öl-Abstreifvorrichtung eine in Umfangsrichtung, insbesondere also in Bewegungsrichtung des von der Stirnseite des Zahnrades abzustreifenden Öls, sich verjüngende Ausnehmung, insbesondere Innenraum oder Hohlraum, umfasst, an dessen Endbereich eine Rohrleitung vorgesehen ist, insbesondere in welche das abgestreifte Öl hineingedrückt wird. Von Vorteil ist dabei, dass eine Pumpwirkung passiv erreichbar ist, indem nur eine zweckdienliche Ausnehmung ausgeformt oder hergestellt.

Bei einer vorteilhaften Ausgestaltung verläuft die an der Öl-Abstreifvorrichtung angeordnete Rohrleitung aufwärts. Von Vorteil ist dabei, dass die Pumpwirkung derart stark ist, dass Öl aufwärts beförderbar ist, also potentielle Energie dem Öl zuführbar ist.

Bei einer vorteilhaften Ausgestaltung ist das obere Ende der an der Öl-Abstreifvorrichtung angeordneten Rohrleitung direkt oder indirekt mit einer Rohrleitung zum Herausführen des Öls aus dem Innenraum verbunden und/oder mit einem Zwischenspeicher verbunden. Von Vorteil ist dabei, dass Öl aus dem Innenraum des Getriebes nach außen führbar und somit dort kühlbar ist und/oder Öl in einen höher liegenden Zwischenspeicher befüllbar ist, wodurch der Ölstand absenkbar ist.

Bei einer vorteilhaften Ausgestaltung umfasst eine Fördereinrichtung die Öl-Abstreifvorrichtung, die Öl von der Stirnseite eines drehenden Zahnrades abstreifbar macht und das abgestreifte Öl durch eine Rohrleitung dem Zwischenspeicher oder einer Sammelrinne zuführbar macht, insbesondere wobei die Rohrleitung aufwärts gerichtet angeordnet ist. Von Vorteil ist dabei, dass dem Öl potentielle Energie zuführbar ist, die zum Absenken des Ölstandes im Getriebe und/oder zur Kühlung des Öls einsetzbar ist.

Bei einer vorteilhaften Ausgestaltung ist das Zahnrad zumindest teilweise im Ölsumpf eingetaucht angeordnet. Von Vorteil ist dabei, dass beim Eintauchen der ebene Bereich der Stirnseite mit einem Ölfilm bedeckt wird und somit bei jeder Umdrehung das abgestreifte Öl nachgeführt wird.

Bei einer vorteilhaften Ausgestaltung ist die Öl-Abstreifvorrichtung oberhalb des Ölsumpfes angeordnet. Von Vorteil ist dabei, dass sichere definierte Verhältnisse vorliegen, insbesondere die Schmierfilmdicke konstant ist.

Bei einer vorteilhaften Ausgestaltung ist in einem Gehäuseteil des Getriebes ein Lager zur Lagerung der eintreibenden Welle vorgesehen ist,
wobei auf der eintreibenden Welle ein Lüfterrad vorgesehen ist,
wobei das Gehäuseteil zumindest im zum Lüfterrad benachbarten Oberflächenbereich abgeschrägt ausgeführt Ist und/oder an dem Gehäuseteil eine abgeschrägt ausgeführte Haube angebracht ist. Von Vorteil ist dabei, dass der Kühlluftstrom möglichst gut führbar ist und somit ein möglichst großer Anteil des Luftstroms am Gehäuse entlang strömt. Auf diese Weise ist ein für die Entwärmung des Getriebes leistungsfähiger Kühlluftstrom vom passiv, also ohne separaten motorischen Antrieb angetriebenen Lüfterrad erzeugbar und pro Bauvolumen eine große Leistung erzeugbar.

Bei einer vorteilhaften Ausgestaltung sind am abgeschrägt ausgeführten Bereich des Gehäuseteils beziehungsweise an der Haube Kühlrippen vorgesehen. Von Vorteil ist dabei, dass die Oberfläche vergrößert ist und somit eine verbesserte Entwärmung gewährleistet ist. Insbesondere ist somit die Wärme vom Gehäuse über Luft an die Haube und von dort an die Umgebung leitbar. Darüber hinaus wirkt das abgeschrägt ausgeführte Gehäuseteil beziehungsweise die abgeschrägt ausgeführte Haube als Luftleitelement und vermindert die Turbulenz.

Bei einer vorteilhaften Ausgestaltung sind am Gehäuseteil des Getriebes Kühlrippen und/oder Kühlfinger vorgesehen. Von Vorteil ist dabei, dass eine Vergrößerung der Oberfläche erfolgt. Bei Kühlfingern ist sogar eine isotrope Entwärmung erreichbar, also eine von der Einbauorientierung des Getriebes unabhängige Entwärmung.

Bei einer vorteilhaften Ausgestaltung ist am Gehäuse des Getriebes ein mit einem Gehäuseteil dicht verbindbarer Gehäusedeckel vorgesehen, der an seiner Außenseite Kühlrippen aufweist. Von Vorteil ist dabei, dass zur Montage, Wartung oder zum Öflausch eine große Öffnung im Gehäuse des Getriebes vorgesehen ist.

Bei einer vorteilhaften Ausgestaltung sind die Kühlrippen entsprechend der Richtung des Kühlluftstroms ausgerichtet, insbesondere wobei die Kühlrippen zueinander parallel ausgerichtet sind. Von Vorteil ist dabei, dass der Luftstrom in geeigneter Weise ausprägbar ist, insbesondere eine Luftleitfunktion ausführbar ist.

Bei einer vorteilhaften Ausgestaltung ist die eintreibende Getriebestufe eine Winkelgetriebestufe. Von Vorteil ist dabei, dass ein abgeschrägt ausgeführtes Gehäuse vorsehbar ist und somit eine verbesserte Luftleitfunktion ausführbar ist.

Bei einer vorteilhaften Ausgestaltung ist eine Luftleit-Einhausung um das Getriebe herum vorgesehen. Von Vorteil ist dabei, dass zwischen Getriebegehäuse und Einhausung der Kühlluftstrom durchführbar ist und somit in einfacher Weise eine sehr gute Ausnutzung des Kühlluftstroms erreichbar ist. Außerdem ist ein weiterer Schutz des Getriebegehäuses ausgeführt, insbesondere für Lagerabdeckungen, Verschlussschrauben und/oder Ölablassschrauben und dergleichen. Solche Teile sind somit auch in Kunststoff anstatt Stahl oder Stahlguss ausführbar, da die Einhausung aus Stahlblech ausführbar ist und somit ein metallischer Schutz gegen die Umgebung vorhanden ist.

Bei einer vorteilhaften Ausgestaltung leitet die Luftleit-Einhausung den Kühlluftstrom und begrenzt diesen zusammen mit den Kühlrippen und dem Gehäuse des Getriebes auf den für den Kühlluftstrom vorgesehenen Raumbereich, insbesondere so dass der Kühlluftstrom möglichst viel Wärmeleistung des Getriebes aufnimmt. Von Vorteil ist dabei, dass der Luftstrom derart leltbar ist, dass eine möglichst gute Entwärmung des Gehäuses mittels des Luftstroms erreichbar ist.

Bei einer vorteilhaften Ausgestaltung weist die Luftleit-Einhausung Durchlässe auf für die eintreibende und abtreibende Welle sowie zur Bodenaufstellung des Getriebes, insbesondere wobei die Luftleit-Einhausung darüber hinaus nur noch eine Ausnehmung für einen Sensor aufweist. Von Vorteil ist dabei, dass die Ausnehmungen in einfacher Weise ausführbar sind, also nicht abgedichtet ausgeführt werden müssen.

Bei einer vorteilhaften Ausgestaltung ist eine Rohrleitung zur Herausleitung von Öl aus dem Getriebeinneren in den Bereich des Kühlluftstroms vorgesehen und eine Rohrleitung zur Zurückführung des Öls ins Getriebeinnere ist ebenfalls im Bereich des Kühlluftstroms vorgesehen, insbesondere wobei die Leitungen ganz oder zumindest teilweise im vom Lüfterrad erzeugten Kühlluftstrom angeordnet sind. Von Vorteil ist dabei, dass eine Kühlung des Öls des Getriebes in einfacher Weise erreichbar ist. Insbesondere muss nur das Öl in einer Leitung heraus- und wieder hineingeführt werden.

Bei einer vorteilhaften Ausgestaltung wird das mittels der Rohrleitung zur Herausleitung beförderte Öl einem Plattenkühler zugeführt, der am Gehäuse des Getriebes, insbesondere im Kühlluftstrom, angeordnet ist, insbesondere wobei die Rohrleitung zur Zurückführung des Öls Öl aus dem Plattenkühler zurück ins Getriebeinnere befördert. Von Vorteil ist dabei, dass eine verbesserte Entwärmung erreichbar ist, Insbesondere ist der Plattenkühler im Kühlluftstrom anordenbar und somit passiv kühlbar. Der Ölstrom ist über eine im Plattenkühler ausgeführte mäanderförmige Führung sehr lange in Kontakt mit dem Plattenkühler und ist somit in der Lage, einen möglichst großen Wärmestrom an die Luft abzugeben.

Bei einer vorteilhaften Ausgestaltung ist der Ölstand, insbesondere des Ölsumpfes des Getriebes, im Betrieb niedriger als der Ölstand im dauerhaft bestehenden Stillstand des Getriebes, insbesondere wobei Mittel zur Absenkung des Betriebs-Ölstandes vorgesehen sind, insbesondere wobei die Mittel zur Absenkung Mittel zur Zwischenspeicherung von Öl sind. Von Vorteil ist dabei, dass bei Starten des Getriebes Lager und Verzahnungsteile vom Öl gut getränkt sind, da der Ölstand zu Beginn sehr hoch ist. Im Betrieb, also bei abgesenktem Ölstand, sind die Planschverluste verringert und es ist über anderer Fördermittel aus dem Zwischenspeicher eine Schmierung der Lager oder Verzahnungsteile erreichbar. Dabei sind im Betrieb diese Fördermittel betreibbar, ohne eine zusätzliche Verlustenergie des Getriebes darzustellen.

Bei einer vorteilhaften Ausgestaltung ist ein Zwischenspeicher vorgesehen, dem Öl aus dem Ölsumpf des Getriebes zuführbar ist, insbesondere mittels einer Fördereinrichtung, insbesondere wobei der Zwischenspeicher im Innenraum des Getriebes angeordnet ist, also vom Getriebegehäuse gehäusebildend umgeben ist. Von Vorteil ist dabei, dass kein zusätzliches Gehäuse oder ein zusätzlicher Raumbereich für den Zwischenspeicher notwendig ist sondern der im Gehäuse des Getriebes vorhandene Raumbereich nutzbar ist. Insbesondere gilt dies für ein Gehäuse, das im Wesentlichen quaderförmig die Verzahnungsteile umgibt, wobei im Bereich der eintreibenden Welle ein abgeschrägt ausgebildeter Bereich am Quader aufgesetzt vorsehbar ist. Vorteiligerweise ist ein quaderförmiges Gehäuse einfach und kostengünstig herstellbar und weist eine hohe Festigkeit bei geringer Wandstärke und bei geringem Materialverbrauch auf. Somit ist ein im Wesentlichen quaderförmiger Innenraum verfügbar abzüglich des Drehbereichs der Verzahnungsteile sowie des Bereichs der Wellen und Lager. Dieser restliche verbleibende Raumbereich ist als Zwischenspeicher verwendbar.

Bei einer vorteilhaften Ausgestaltung ist der Zwischenspeicher als Gefäß ausgeführt, das derartige Ausnehmungen aufweist, dass er entleerbar ist durch diese Ausnehmungen. Von Vorteil ist dabei, dass der Zwischenspeicher sich entleert, wenn das Getriebe im Ruhezustand ist, insbesondere mit einer ersten Zeitkonstante. Die Befüllung des Zwischenspeichers mittels der Fördereinrichtung im Getriebe erfolgt mit einer derartigen Förderleistung, dass der geförderte Ölstrom den Zwischenspeicher mit einer derartigen zweite Zeitkonstante befüllen würde bei Nicht-Vorhandensein der Ausnehmungen, dass diese zweite Zeitkonstante kleiner ist als die erste Zeitkonstante, insbesondere mehr als dreimal kleiner oder gar mehr als zehnmal kleiner.

Bei einer vorteilhaften Ausgestaltung ist der Zwischenspeicher als Gefäß ausgeführt, das derartige Ausnehmungen aufweist und die Fördereinrichtung derartig ausgeführt ist, dass der von der Fördereinrichtung, insbesondere bei Betrieb des Getriebes mit der Nenndrehzahl des Getriebes, maximal zugeführte Ölstrom größer ist als der durch die Ausnehmungen bewirkte, vom Zwischenspeicher zum Ölsumpf rückgeführte Ölstrom. Von Vorteil ist dabei, dass eine Befüllung des Zwischenspelchers schnell erreichbar ist und somit eine Absenkung des Ölstandes des Getriebes nach Inbetriebnahme sehr schnell erfolgt. Insbesondere ist vorteilig, die Ausnehmungen derart klein vorzusehen und die Fördereinrichtung mit einer derartigen Förderleistung auszuführen, dass der zugeführte Ölstrom mindestens dreimal oder gar zehnmal größer ist als der rückgeführte Ölstrom.

Bei einer vorteilhaften Ausgestaltung weist der Zwischenspeicher einen Überlauf, insbesondere einen höhenverstellbaren Überlauf, auf, über den überschüssiges Öl in den Ölsumpf abführbar ist. Von Vorteil ist dabei, dass je nach Variante des Getriebes eine Anpassung des Ölstandes ausführbar ist. Außerdem ist eine Anpassung des abgesenkten Ölstandniveaus abhängig von den Betriebsbedingungen und Fertigungstoleranzen ermöglicht.

Bei einer vorteilhaften Ausgestaltung weist die Fördereinrichtung ein Prallblech zum Auffangen von Öl auf, wobei vom Prallblech abtropfendes Öl über eine Ablaufrinne und/oder Sammelrinne dem Zwischenspeicher zuführbar ist. Von Vorteil ist dabei, dass ein Teil der Fördermittel in einfacher Weise ausführbar ist und herumspritzendes Öl in einfacher Weise auffangbar ist.

Bei einer vorteilhaften Ausgestaltung weist die Ablaufrinne oder Sammelrinne eine Ausnehmung auf, in die eine Leitung mündet, aus der ein Kugellager und/oder eine Verzahnung schmierbar ist. Von Vorteil ist dabei, dass die Fördermittel einfach und kostengünstig sind.

Bei einer vorteilhaften Ausgestaltung ist die Ablaufrinne gekrümmt ausgeführt, so dass ein erster Teil des vom Prallblech abgetropften und von der Ablaufrinne aufgefangenen Öls in eine erste Sammelrinne und ein zweiter Teil des vom Prallblech abgetropften und von der Ablaufrinne aufgefangenen Öls in eine zweite Sammelrinne fließt, wobei der Zwischenspeicher aus den Sammelrinnen befüllbar ist und die Sammelrinnen axial seitlich von einem Zahnrad des Getriebes angeordnet sind. Von Vorteil ist dabei, dass der restliche Raumbereich, der nicht zum Drehbereich der Verzahnungsteile zählt und im Inneren des quaderförmigen Getriebes vorgesehen ist, nutzbar ist.

Bei einer vorteilhaften Ausgestaltung ist zumindest ein Teilbereich eines Verzahnungsteils des Getriebes von einer Schale umgeben, so dass ein Abspritzen von Öl nur nach oben ermöglicht ist, insbesondere wobei die Schale an ihrer Unterseite eine Ausnehmung aufweist, so dass ein Befüllen der Schale aus dem Ölsumpf ermöglicht ist, insbesondere bei Nicht-Betrieb des Getriebes. Von Vorteil ist dabei, dass mehr Öl nach oben abgespritzt wird und somit eine verbesserte Entwärmung erreichbar ist, da das Öl einen langen Weg zum Ölsumpf zurücklegen muss, wobei es beim Zurückfließen in Kontakt mit dem Gehäuse des Getriebes steht.

Bei einer vorteilhaften Ausgestaltung umfasst die Fördereinrichtung eine Öl-Abstreifvorrichtung, die Öl von der Stirnseite eines drehenden Zahnrades abstreifbar macht und das abgestreifte Öl durch eine Rohrleitung dem Zwischenspeicher oder einer Sammelrinne zuführbar macht, insbesondere wobei die Rohrleitung aufwärts gerichtet angeordnet ist, insbesondere wobei das Zahnrad zumindest teilweise im Ölsumpf eingetaucht angeordnet ist, insbesondere wobei die Öl-Abstreifvorrichtung oberhalb des Ölsumpfes angeordnet Ist. Von Vorteil ist dabei, dass ein weiteres kostengünstiges und einfaches Fördermittel vorsehbar ist. Insbesondere ist eine Förderwirkung erzielbar, um Öl durch die Rohrleitung in eine Sammelvorrichtung oder einen Zwischenspeicher zu befördern, aus dem wiederum eine in die Umgebung führende Rohrleitung beschickbar ist. Somit ist also Öl in die Umgebung förderbar und dort enlwärmbar im vorbeiströmenden Kühlluftstrom, insbesondere mittels des dort angeordneten Plattenkühlers.

Bei einer vorteilhaften Ausgestaltung umfasst die Leitung Bohrungen im Getriebegehäuse . Von Vorteil ist dabei, dass Öl durch diese Bohrungen hin zu den Lagern, beispielsweise Kugellagern, beförderbar ist. Somit ist die Schmierung dieser Lager sicherstellbar.

Bei einer vorteilhaften Ausgestaltung fördert eine Fördereinrichtung Öl aus dem Innenraum des Getriebes durch eine Rohrleitung , welche an der Außenseite des Getriebes befestigt ist, insbesondere wobei die Rohrleitung das Öl zurückführt in den Innenraum des Getriebes. Von Vorteil ist dabei, dass das Öl nach Herausführen im äußeren Bereich um das Getriebe herum kühlbar ist, insbesondere in einem Kühlluftstrom, der von einem Lüfterrad angetrieben ist.

Bei einer vorteilhaften Ausgestaltung weist die Rohrleitung an der Außenseite des Getriebes ein Gefälle auf, insbesondere wobei das Öl aus einer im Innenraum des Getriebes angeordneten Sammelvorrichtung, wie Zwischenspeicher oder Sammelrinne, durch die Rohrleitung nach außen und von dort wieder zurück in den Ölsumpf fließt,

insbesondere wobei die Sammelvorrichtung oberhalb des Ölsumpfes angeordnet ist. Von Vorteil ist dabei, dass das Antreiben des Ölstroms mittels bloßem Gefälle im Gravitationsfeld antreibbar ist, also passiv. Dabei wird eine Verlustenergie des Getriebes zur Anhebung des Öls ausgenutzt. Denn das Öl im Innenraum des Getriebes wird bei dessen Betrieb herumgespritzt, insbesondere auch nach oben. Ein Teil des dort aufgefangenen Öls wird dann ohne weitere Pumpe unter Ausnutzung des Gefälles abwärts befördert und dabei gekühlt.

Bei einer vorteilhaften Ausgestaltung leitet die an der Außenseite vorgesehene Rohrleitung einem Plattenkühler Öl zu und ein anderes Stück der Rohrleitung Öl aus dem Plattenkühler zurückleitet in den Ölsumpf im Innenraum des Getriebes. Von Vorteil ist dabei, dass eine Beförderung des Öls mit einfachen Mitteln in kostengünstiger Weise erfolgt.

Bei einer vorteilhaften Ausgestaltung ist der Plattenkühler an der Außenseite des Getriebes befestigt und im Kühlluftstrom angeordnet. Von Vorteil ist dabei, dass eine vergrößerte Oberfläche vorgesehen ist und somit eine verbesserte Entwärmung erreichbar ist. Insbesondere ist der Plattenkühler parallel zum Kühlluftstrom ausrichtbar, so dass die Strömung möglichst wenig Turbulenz zeigt.

Bei einer vorteilhaften Ausgestaltung ist der Raumbereich eines in einer Ausnehmung des Getriebegehäuses angeordneten Lagers einer Welle zumindest teilweise zum Innenraum des Getriebes mittels eines Begrenzungsmittels begrenzt, das eine Ausnehmung für eine im Lager gelagerte Welle aufweist,
wobei der tiefste Punkt der Ausnehmung einen Mindestölstand im Raumbereich des Lagers bewirkt. Von Vorteil ist dabei, dass somit im Betrieb ein Mindestölstand im Bereich der Lager gesichert ist und somit diese gut geschmiert sind. Im Ruhezustand des Getriebes ist ein höherer Ölstand als dieser Mindestölstand erlaubt und wird bei Betrieb des Getriebes abgesenkt. Somit liegt also eine sehr gute Anfangsschmierung des Lagers vor und trotzdem sind die Verluste im Betrieb verminderbar.

Bei einer vorteilhaften Ausgestaltung ist der Raumbereich zumindest teilweise vom Getriebegehäuse begrenzt. Von Vorteil ist dabei, dass der Raumbereich der Bereich des Lagers ist, welcher zum Getriebeinneren hin nur mittels des Schutzbleches zu begrenzen ist.

Bei einer vorteilhaften Ausgestaltung ist das Begrenzungsmittel ein Schutzblech oder ein Ring. Von Vorteil ist dabei, dass eine einfache und kostengünstige Begrenzung des Raumbereiches erreichbar ist.

Bei einer vorteilhaften Ausgestaltung ist das Schutzblech am Gehäuse angeschweißt oder schraubverbunden. Von Vorteil ist dabei, dass eine dichte Verbindung in einfacher und kostengünstiger Weise herstellbar ist.

Bei einer vorteilhaften Ausgestaltung ist der Ring in einer Nut, insbesondere einer in Umfangsrichtung umlaufenden Nut im Gehäuse des Getriebes, vorgesehen. Von Vorteil ist dabei, dass der Mindestölstand in einfacher Weise vorgebbar ist. Bei einem solchen Ring ist der Schutz gegen spritzendes Öl zwar nicht derart hoch wie bei Verwendung eines Schutzbleches aber der Mindestölstand ist In einfacher Weise sicher stellbar.

Bei einer vorteilhaften Ausgestaltung umschließt die Ausnehmung die durchgehende Welle möglichst dicht, insbesondere mit einem Abstand von weniger als 3 mm, insbesondere von weniger als 1 mm. Von Vorteil ist dabei, dass ein möglichst guter Schutz gegen heranspritzendes Öl oder Ölschaum erreichbar ist.

Bei einer vorteilhaften Ausgestaltung ist das Schutzblech flach ausgeführt, insbesondere den Bereich der Ausnehmung für das Lager abdeckt. Von Vorteil ist dabei, dass ein einfaches Blech-Stanzteil verwendbar ist, bei dem nur die Außenkontur und die Ausnehmungen für den Durchlass von Wellen, insbesondere halbkreisförmige Ausnehmungen, die am Randbereich des Schutzblechs vorgesehen sind, notwendig sind.

Bei einer vorteilhaften Ausgestaltung umfasst das Gehäuse des Getriebes ein unteres und ein oberes Gehäuseteil, die Montage des Getriebes sehr einfach und wenig aufwendig ausführbar ist,
wobei an dem unteren Gehäuseteil ein Schutzblech befestigt ist, welches im Wesentlichen die untere Hälfte der Welle umgibt,
wobei an dem oberen Gehäuseteil ein weiteres Schutzblech befestigt ist, welches im Wesentlichen die obere Hälfte der Welle umgibt. Von Vorteil ist dabei, dass das Einlegen eines Rings oder eines Schutzblechs besonders einfach ausführbar ist. Ebenso sind Komponenten wie Lager, Wellen und Zahnräder in einfacher Weise montierbar. Denn diese werden einfach von oben in den entsprechenden Aufnahmebereich eingeschoben. Bei einem Ring ist der Aufnahmebereich eine in Umlaufrichtung verlaufende Nut. Das Schutzblech hingegen ist von oben einführbar und dann an die Gehäusewandung andrückbar. Danach ist dann das Schweißverbinden und/oder Schraubverbinden ausführbar.

Bei einer vorteilhaften Ausgestaltung sind die Lager, insbesondere die beiden Lager, der eintreibenden Welle des Getriebes in einem Gehäuseteil, insbesondere in einem im Wesentlichen topfförmigen Gehäuseteil, vorgesehen, wobei das Gehäuseteil mit einem Gehäuseteil des Getriebes schraubverbunden vorgesehen ist. Von Vorteil ist dabei, dass der Einbau der eintreibenden Welle in ein Gehäuseteil vorfertigbar ist, also vormontierbar. Somit ist diese die eintreibende Welle, deren Lager und zugehörige Dichtung umfassende Einheit im Lager bevorratbar und schnell und einfach einbaubar. Insbesondere ist auch eine Baureihe von Getrieben erzeugbar, die mit wenigen Teilen eine hohe Varianz bietet. Das Getriebe ist nämlich als Parallelwellengetriebe ausführbar, wenn die für das topfförmige Gehäuseteil vorgesehene Öffnung im Gehäuse des Getriebes verschlossen wird und die eintreibende Welle an einer Öffnung der Seitenwand des Getriebes vorgesehen wird. Alternativ ist aber auch die Winkelgetriebestufe vorsehbar anstatt des verschließenden Teils. Somit ist aus dem gleichen Grundgehäuse ein Getriebe mit eintreibender Winkelgetriebestufe oder eintreibender Parallelwellengetriebestufe fertigbar.

Bei einer vorteilhaften Ausgestaltung ist ein erstes Lager als Lagerpaar ausgeführt, wobei in axialer Richtung zwischen den gepaarten Einzellagern ein erster Zwischenraum gebildet ist. Von Vorteil ist dabei, dass hohe Querkräfte aufnehmbar sind und somit ein besonders stabiles Getriebe herstellbar ist. Insbesondere ist ein gegeneinander angestelltes Paar von Einzellagem verwendbar, zwischen deren Außenringe somit ein Zwischenraum erzeugt ist.

Bei einer vorteilhaften Ausgestaltung ist ein zweites Lager in axialer Richtung vom ersten Lager axial beabstandet, so dass ein zweiter Zwischenraum gebildet ist. Von Vorteil ist dabei, dass wiederum hohe Querkräfte aufnehmbar sind. Je größer der Abstand zwischen den Lagern ist desto höher sind die aufnehmbaren Querkräfte.

Bei einer vorteilhaften Ausgestaltung ist ein erstes Lager der eintreibenden Welle als gegeneinander angestelltes Kegelrollenlagerpaar, insbesondere in X-Anordnung, und ein zweites Lager als Pendelrollenlager ausgeführt. Von Vorteil ist dabei, dass eine besonders stabile und querkraftaufnahmefähige Anordnung herstellbar ist.

Bei einer vorteilhaften Ausgestaltung ist der erste und/oder zweite Zwischenraum mittels einer oder mehr Bohrungen mit dem Innenraum des Getriebes verbunden, insbesondere zur Entleerung. Von Vorteil ist dabei, dass eine gute Schmierung bei ruhendem Getriebe erreichbar ist. Hierzu ist es vorteilhaft, den Öistand des Getriebes im Ruhezustand entsprechend hoch oder die Position und das Gefälle der Bohrungen entsprechend niedrig vorzusehen. Bei in Betriebs ich befindendem Getriebe ist ein Mindestölstand in den Zwischenräumen einhaltbar wiederum durch entsprechende Festlegung der Höhe der Bohrungen und des Gefälles. Insbesondere sind auch Bohrungen ohne Gefälle vorteilhaft verwendbar. Ein weiterer Vorteil der Entleerung der Zwischenräume ist, dass keine großen Ölmengen dauerhaft an der eintriebsseitigen Dichtung ansteht und somit die Gefahr eines Ölaustritts verringerbar ist.

Bei einer vorteilhaften Ausgestaltung ist der erste und/oder zweite Zwischenraum mittels eines Spaltes mit dem Innenraum des Getriebes verbunden, insbesondere zur Entleerung, wobei der Spalt zwischen Gehäuseteil, insbesondere dem im Wesentlichen topfförmigen Gehäuseteil, und dem Gehäuseteil des Getriebes gebildet ist. Von Vorteil ist dabei, dass ein Durchlass für Öl in einfacher Weise vorsehbar ist und somit die Entleerung des Zwischenraums ohne Zusatzaufwand ermöglicht ist.

Bei einer vorteilhaften Ausgestaltung ist eine Bohrung oder eine der Bohrungen eine Radialbohrung. Von Vorteil ist dabei, dass eine einfache und wenig aufwendige Bohrung vorsehbar ist zur Entleerung. Insbesondere ist diese in Schwerkraftrichtung anordenbar, so dass eine besonders effektive Entleerung erreichbar ist. Zur Einhaltung eines Mindestölstandes ist aber auch eine horizontale Ausrichtung der Bohrung vorteilhaft.

Bei einer vorteilhaften Ausgestaltung ist eine Bohrung oder eine der Bohrungen eine axial gerichtete Bohrung. Von Vorteil ist dabei, dass eine Entleerung zum axial weiter innen angeordneten Ölsumpf erreichbar ist mit geringem Aufwand.

Bei einer vorteilhaften Ausgestaltung ist die Radialbohrung an ihrem äußeren Ende mittels eines Verschlussstopfens verschlossen vorgesehen. Von Vorteil ist dabei, dass nicht nur eine einfache und kostengünstige Radialbohrung ausreicht zur Entleerung sondern auch ein Zugang geschaffen ist zum Bereich der Lager. Somit sind im Bereich der Lager auch Sensoren, beispielsweise zur Bestimmung von Drehzahl der eintreibenden Welle, Querkraft oder Axialkraft anordenbar oder auch Sensoren zur Überwachung der Funktion der Lager, wie beispielsweise Temperatursensoren oder Körperschallsensoren. Die zugehörigen Signalleitungen sind ohne besonderen Aufwand durch die Radialbohrung und den entsprechend dicht verschließenden Verschlussstopfen herausführbar.

Bei einer vorteilhaften Ausgestaltung ist ein eintreibende Welle mittels eines Wellendichtrings gegen das Gehäuseteil, insbesondere gegen das topfförmige Gehäuseteil, abgedichtet vorgesehen. Von Vorteil ist dabei, dass ein Ölaustritt verhinderbar ist.

Bei einer vorteilhaften Ausgestaltung bestimmt die Höhe der Anordnung der Bohrung oder des Spaltes zur Entleerung eines Zwischenraumes einen Mindestölstand für die Lager der eintreibenden Welle bestimmt. Von Vorteil ist dabei, dass das Einhalten eines Mindestölstandes in einfacher und wenig aufwendiger Weise erreichbar ist.

Weitere Vorteile ergeben sich aus den Unteransprüchen.

Die Erfindung wird nun anhand von Abbildungen näher erläutert:

In der Figur 1 ist ein erstes erfindungsgemäßes Getriebe in Vorderansicht gezeigt.

In Figur 2 und 3 ist das Getriebe nach Figur 1 aus zwei verschiedenen Blickrichtungen gezeigt.

In Figur 4 ist ein weiteres erfindungsgemäßes Getriebe gezeigt, wobei im Unterschied zu den Figuren 1 bis 3 zusätzlich eine Einhausung vorgesehen ist.

In der Figur 5 ist ein weiteres erfindungsgemäßes Getriebe mit Plattenkühler 52 gezeigt, der am Gehäuse des Getriebes befestigt ist.

In der Figur 6 ist ein weiteres erfindungsgemäßes Getriebe gezeigt, wobei aus dem Getriebeinneren herausgeführte und wieder hinein geführte Öl-Leitungen gezeigt sind.

In der Figur 7 ist ein weiteres erfindungsgemäßes Getriebe in der Seitenansicht gezeigt, das an einer Seitenfläche angeschnitten dargestellt ist, wobei das Niveau des Ölstandes bei Betrieb und bei Stillstand dargestellt ist.

In der Figur 8 ist hierzu noch eine Schrägansicht gezeigt, die auch Leitrinnen 93 und eine Sammeltasche 90 erkennen lässt.

In der Figur 9 ist das zur Figur 7 gehörige Getriebe in der Draufsicht gezeigt, also mit Blickrichtung von oben, das ebenfalls angeschnitten dargestellt ist, wobei der Anschnitt an der Oberseite ausgeführt ist.

In der Figur 10 ist ein zur Ölfördereinrichtung gehöriges Abstreifelement gezeigt.

In der Figur 11 ist das Abstreifelement in Schrägansicht gezeigt.

In der Figur 12 ist das Abstreifelement in Draufsicht gezeigt.

In der Figur 13 sind die Schutzbleche 132 gegen Spritzendes Öl gezeigt.

In der Figur 14 sind die Schutzbleche 132 separat gezeigt, wobei sie mit dem Getriebegehäuse verbunden sind.

In der Figur 15 ist ein Gehäusedeckel 151 gezeigt, der dachartig ausgeführt ist.

In der Figur 16 ist ein waagerechter Querschnitt durch die eintreibende Winkelgetriebestufe gezeigt.

In der Figur 17 ist eine Draufsicht in einen ähnlichen Schnitt gezeigt.

In der Figur 18 ist die Ansicht aus einer anderen Blickrichtung gezeigt.

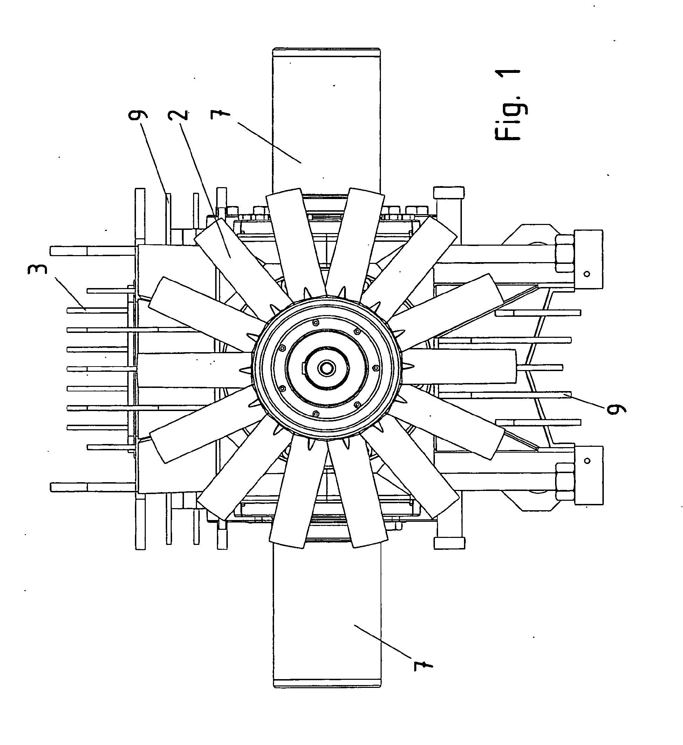

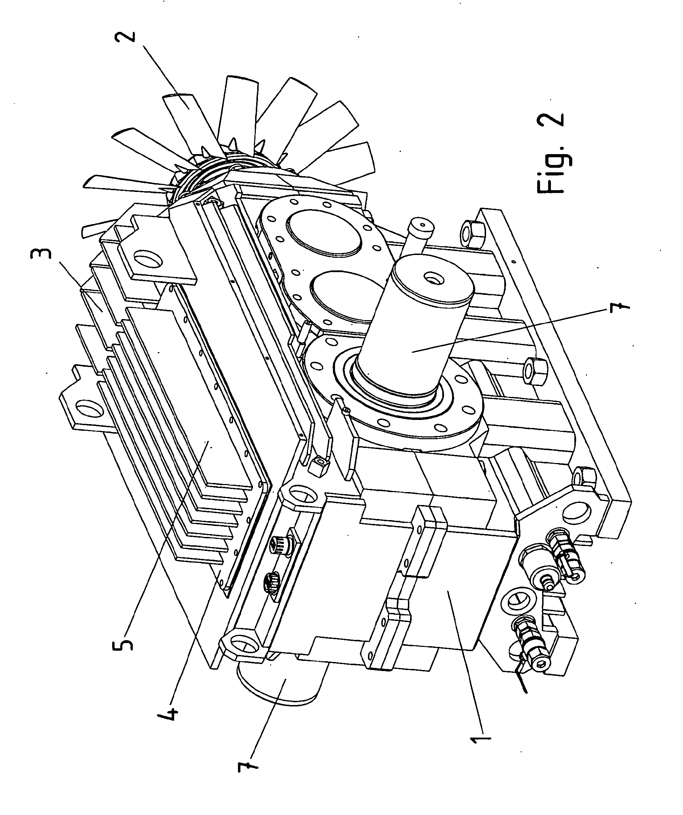

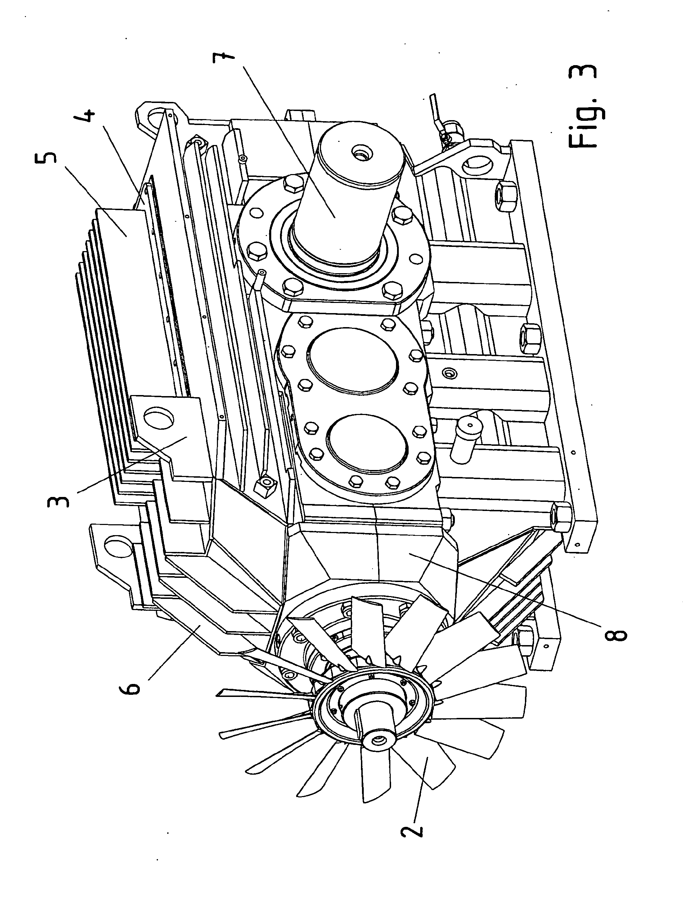

Bei dem Ausführungsbeispiel nach Figuren 1 bis 3 ist auf der eintreibenden Welle ein Lüfterrad 2 drehfest verbunden. Somit ist das Lüfterrad mit einer entsprechend hohen Drehzahl betrieben und erzeugt mit seinen Lüfterradflügeln einen kräftigen Luftstrom, wenn das Getriebe mit der Nenndrehzahl betrieben wird. Je höher die Drehzahl und das Drehmoment desto höher ist auch die Verlustleistung also die an die Umgebung abzuführende Wärmeleistung.

Der vom Lüfterrad 2 erzeugte Kühlluftstrom wird an einem abgeschrägt ausgeführten Gehäusebereich 8 entlang geführt. Dieser ist entweder erzeugt durch Aufsetzen von entsprechend geformten Blechstücken und Verbinden derselben mit dem Gehäuseteil 1 oder alternativ durch entsprechende Formgebung des Gehäuseteils 1, was insbesondere bei einer eintreibend vorzusehenden Winkelgetriebestufe ohne besonderen Zusatzaufwand ausführbar ist.

Des Weiteren sind an dem abgeschrägt ausgeführten Gehäusebereich 8 Kühlrippen 6 vorgesehen und am Gehäuseteil 1 die Kühlrippen 3 und 9

Am Gehäuseteil ist auch zu Montage- und Wartungszwecken ein Gehäusedeckel 4 mit Kühlrippen 5 vorgesehen.

Auf diese Weise ist der Kühlluftstrom optimal ausnutzbar.

Die Abtriebswelle 7 ist beidseitig ausgeführt, ist aber bei anderen Ausführungsbeispielen auch einseitig ausführbar.

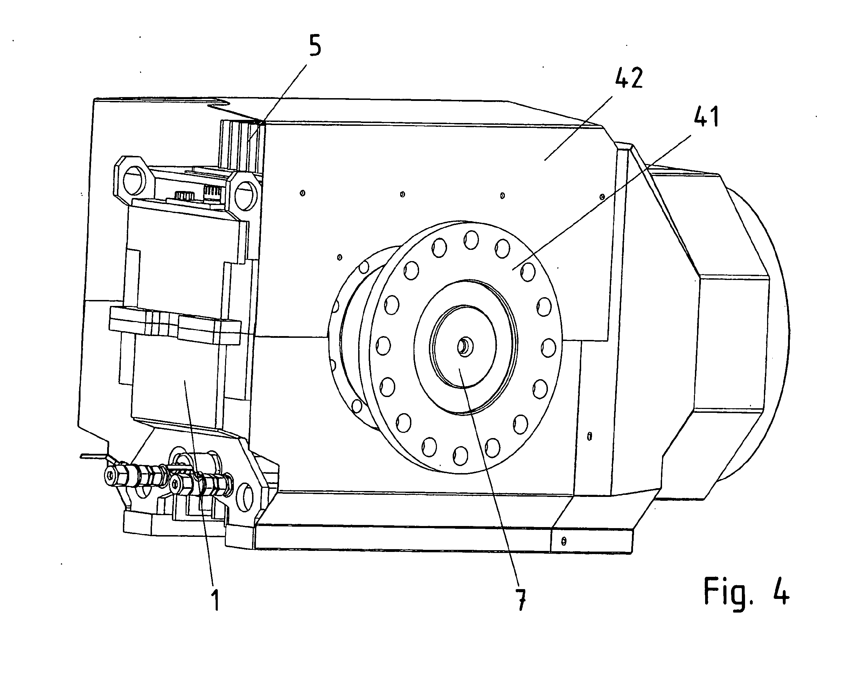

In der Figur 4 ist ein zusätzlich am Getriebe vorgesehenes Luftleitteil, nämlich eine Luftleit-Einhausung 42 vorgesehen. Dabei ist ein Durchlass für Eintriebswelle und Abtriebswelle 7 vorgesehen. Die Abtriebswelle 7 ist im weiteren Unterschied zu den Figuren 1 bis 3 mit einem Drehflanschteil 41 drehfest verbunden.

Die Luftleit-Einhausung 42 vermindert das Abdriften des Kühlluftstroms und führt somit zu einer leistungsstärkeren Entwärmung. Außerdem dient sie auch als Schutz vor Staubablagerungen auf dem Getriebegehäuse und schützt somit den Wärmeübergangswiderstand vom Getriebegehäuse zum Kühlluftstrom vor einer Verschlechterung.

Außerdem sind zwischen dem Getriebegehäuse und der Luftleit-Einhausung weitere zu kühlende Teile oder Komponenten anordenbar, wie beispielsweise Leistungselektronik oder Kühlvorrichtungen zum Kühlen von Öl. Für Letzteres beschreiben die nachfolgenden Figuren beispielhafte Ausführungen.

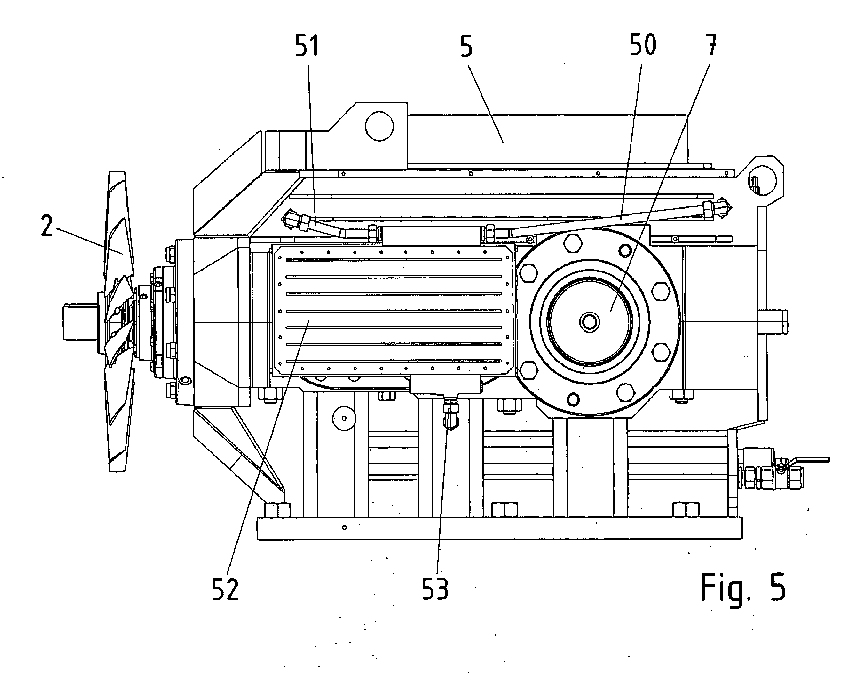

In der Figur 5 ist am Gehäuse 1 des Getriebes ein Plattenkühler 52 befestigt, dem Öl aus dem Getriebeinneren über ein oder mehrere Zuleitungsrohre 50 zugeführt und über ein oder mehrere Ableitungsrohre 51 abgeführt wird. Vorzugsweise umfasst der Plattenkühler eine Grundplatte mit einer mäanderförmig ausgenommenen Nut, wobei eine Deckelplatte auf die Grundplatte aufgesetzt ist. Somit muss das Öl mäanderförmig den Plattenkühler durchströmen. Alternativ sind auch gerade Bohrungen in einem Grundkörper ausführbar und das Öl durch die Bohrungen leitbar, wobei Umlenkstücke zwischen den Endbereichen der Bohrungen am Grundkörper vorgesehen sind.

An der zu der Seite des Getriebes mit dem Plattenkühler hinteren, also in der Figur 5 nicht sichtbaren Seite ist ebenfalls ein Plattenkühler 52 mit den entsprechenden Rohren vorsehbar, so dass eine Verdoppelung der Kühlleistung erreichbar ist.

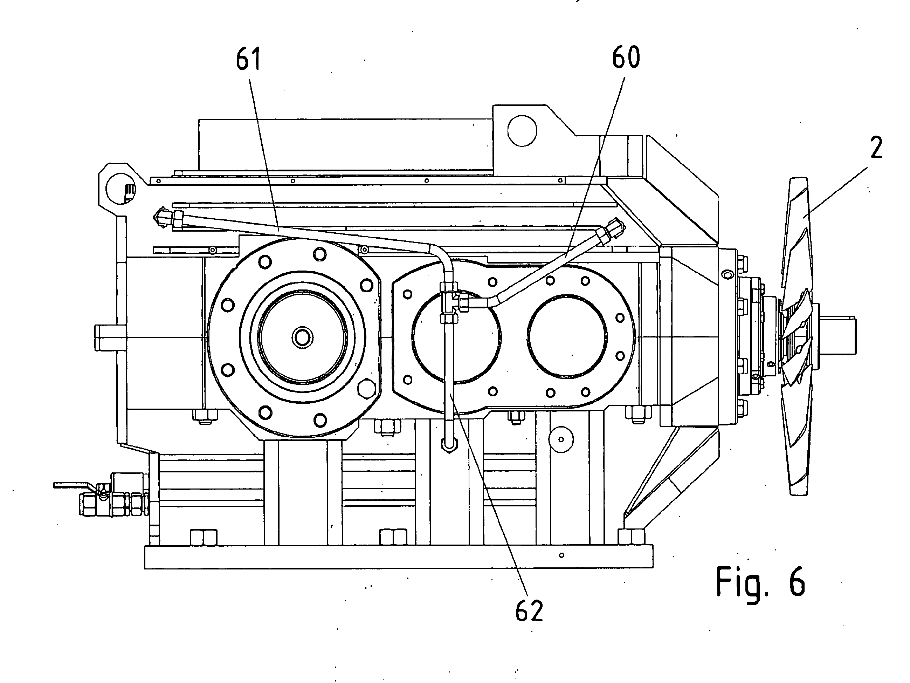

In der Figur 6 ist der Plattenkühler 52 weggelassen. Die Zuleitungsrohre 60 und 61 werden zusammengeführt und münden in das Ableitungsrohr 62. Somit sind die Rohre dem Kühlluftstrom direkt ausgesetzt und es kann insbesondere bei langsamem Durchströmen mit Öl eine ausreichende Kühlleistung auch ohne den Aufwand eines Plattenkühlers erreicht werden.

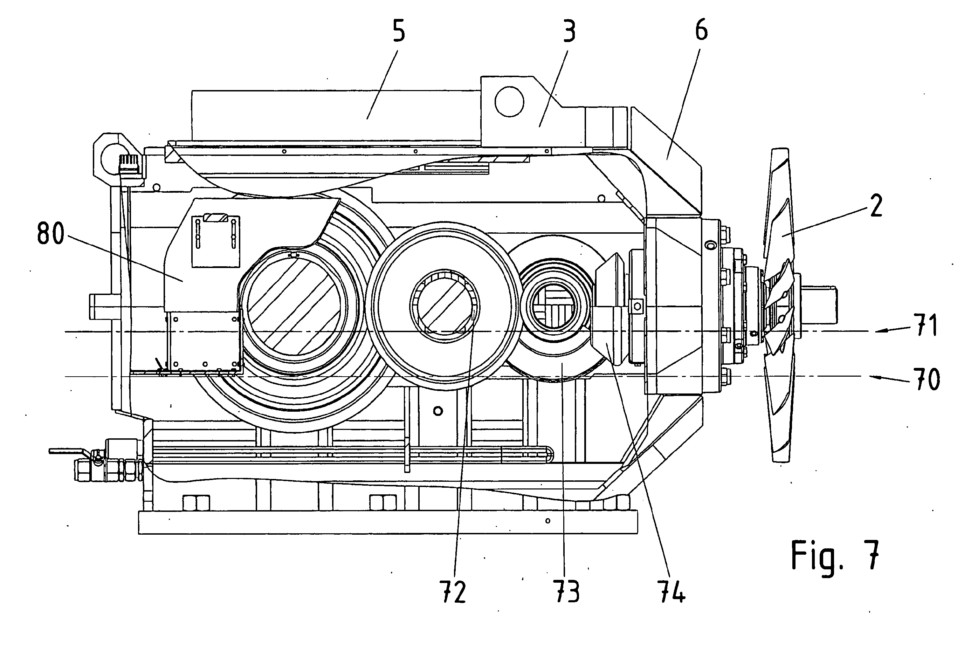

In der Figur 7 ist gezeigt, dass das Betriebsniveau 70 des Ölstandes abgesenkt vorgesehen ist gegenüber dem Stillstandsniveau 71 des Ölstandes. Somit ist beim Anlaufen des Getriebes eine gute Schmierung aller Lager, insbesondere auch der Lager der eintreibenden Getriebestufe oder der Lager 72 einer oder mehrerer der Zwischenstufen des Getriebes, sofort vorhanden, da der Ölstand derart hoch ist, dass die Lager und Verzahnungsteile genügend tief im Ölsumpf angeordnet sind. Wenn also auch nach langen Stillstandzeiten das Getriebe gestartet wird, ist eine gute Schmierung vorhanden.

Die eintreibende Stufe des Getriebes ist als Winkelgetriebestufe ausgeführt. Hierzu ist an der eintreibenden Welle ein Kegelritzel vorgesehen, das mit einem Kegelrad kämmt. Mittels einer Schale 73 für das Kegelrad und einer Schale 74 für das Kegelritzel, die jeweils um die untere Hälfte dieser Verzahnungsräder vorgesehen sind, werden Planschverluste vermindert. Denn die Schalen (73, 74) sind derart geformt, dass das Öl zumindest im Bereich der Schalen (73, 74) bei Drehbewegung der Verzahnungsteile im Wesentlichen auf einer Kreisbahn gehalten wird. Somit wird also der innere Bereich zwischen jeweiliger Schale und Verzahnungsteil befreit von Öl oder in diesem Bereich zumindest der Ölanteil wesentlich vermindert.

Da die Schalen (73, 74) nur die im Wesentlichen die untere Hälfte der Verzahnungsteile umgeben, wird Öl nur nach oben abgespritzt. Daher muss das Öl beim von der Schwerkraft angetriebenem Ablaufen weite Wege entlang der Innenfläche des Gehäuses und/oder entlang einer Förderanordnung zurücklegen, wodurch eine gute Wärmeabgabe vom Öl ans Getriebegehäuse erreichbar ist. Die Schalen (73, 74) weisen an ihrer Unterseite zumindest eine Ausnehmung auf, so dass Öl aus dem Ölsumpf nachströmen kann in den Raumbereich zwischen Schale (73, 74) und Verzahnungsteil. Allerdings ist die Ausnehmung derart klein, dass der Ölstrom in den Raumbereich mindestens fünfmal oder mindestens zehnmal kleiner ist als der Ölstrom, den das Verzahnungsteil aus dem Raumbereich herauszubefördern vermag, wenn die Nenndrehzahl der eintreibenden Welle im Betrieb erreicht ist.

Vorzugsweise sind die Schalen (73, 74) halbtorusförmig ausgeführt

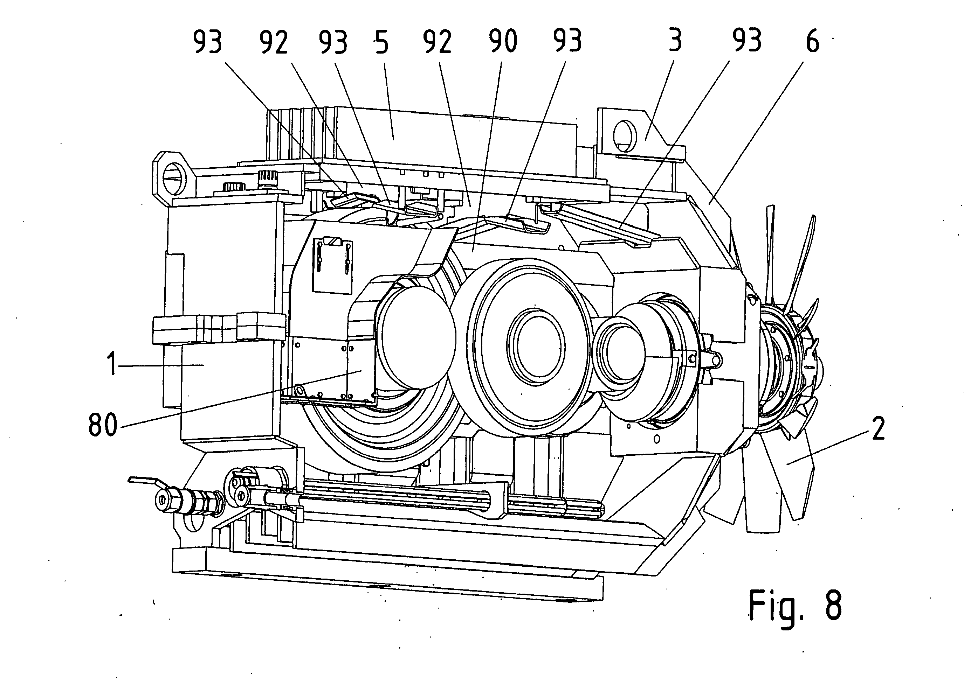

Wie in Figur 8 deutlicher gezeigt ist, wird mittels der nachfolgend näher beschriebenen Öl-Förderanordnung im Betrieb Öl in einen höher liegenden Zwischenspeicher 80 gefördert, so dass der Pegel des Ölstandes sinkt. Wegen dieser Absenkung des Ölstandes im Betrieb ist eine Verringerung der Planschverluste erreichbar. Das heißt, dass die Verzahnungsteile nur geringfügig im Ölsumpf eingreifen, insbesondere tauchen die schnell drehenden Verzahnungsteile, wie beispielsweise die Verzahnungsteile der eintreibenden Getriebestufe und einer oder mehrerer Zwischengetriebestufen, weniger tief ein oder gar nicht ein in den Ölsumpf.

Der Zwischenspeicher 80 weist Undichtigkeiten oder anderweitig vorgesehene kleine Ausnehmungen auf, so dass eine Entleerung des Zwischenspeichers automatisch erfolgt. Die Ausnehmungen sind derart vorgesehen, dass bei Nennbetrieb die vorgesehene Absenkung des Ölstandes erfolgt, also der Ölstrom, welcher in den Zwischenspeicher 80 einströmt, größer ist als der Ölstrom, welcher aus dem Zwischenspeicher 80 in den Ölsumpf zurück strömt - zumindest solange der Ölstand im Zwischenspeicher unterhalb eines kritischen Wertes ist.

Somit wird also mittels der Öl-Förderanordnung im Betrieb der Zwischenspeicher befüllt und somit wird mit steigendem Ölstand im Zwischenspeicher 80 der Ölstand im Getriebe, insbesondere im Ölsumpf, abgesenkt, so dass die Verlustleistungen gesenkt werden.

Die Schmierung der Lager und Verzahnungen erfolgt beim Betrieb dadurch, dass das aus den im Eingriff stehenden Verzahnungen herausgequetschte und/oder gespritzte Öl mittels Prallblechen 92 aufgefangen wird und von diesen abtropft in Öl-Leitrinnen 93, die seitliche Sammeltaschen 90 befüllen, aus denen zumindest ein Teil des aufgefangenen Öls den zu schmierenden Lagern und den zu schmierenden Verzahnungsteilen zugeführt wird.

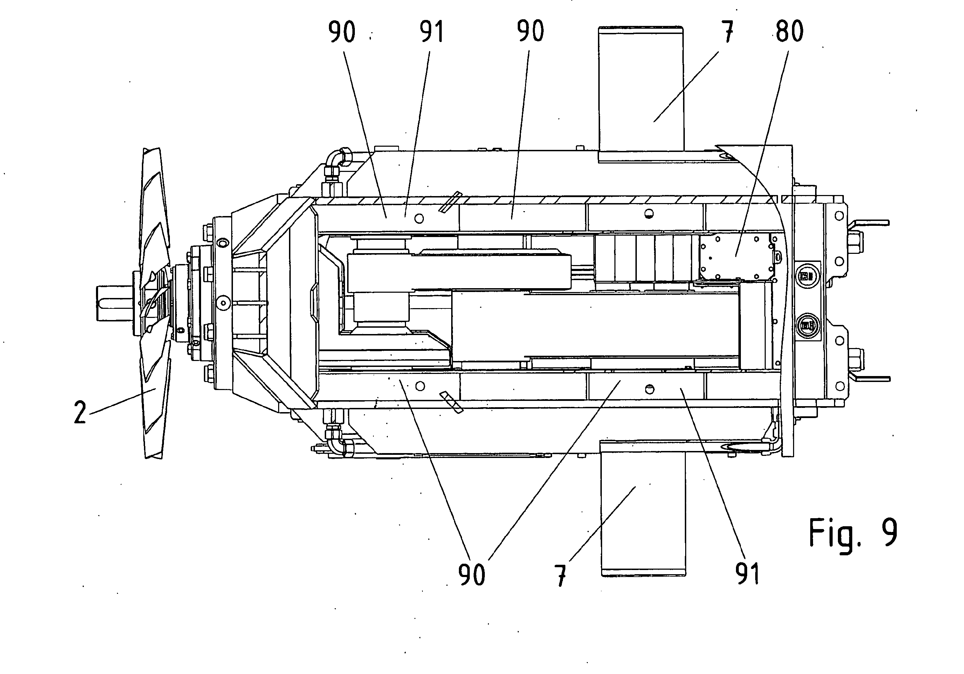

Wie in Figur 9 gezeigt ist, weisen hierzu die im Getriebe beidseitig angeordneten Sammeltaschen 90 Ablassöffnungen 91 zur Lagerschmierung auf. Die Ablassöffnungen münden in Bohrungen im Gehäuse, durch die das Öl zum zu schmierenden Lager geleitet wird beziehungsweise über Leitrinnen zum jeweiligen zu schmierenden Verzahnungsteil.

Die Öl-Leitrinnen 93 sind dabei gebogen ausgeführt, so dass ein Teil des aufgefangenen Öls in eine erste und ein anderer Teil in die andere Sammeltasche 90 geleitet wird.

Eine Schmierung der Verzahnungsteile und der Lager der Abtriebswelle ist nicht in jedem Fall notwendig, da diese Verzahnungsteile langsam drehen und somit nur geringe Planschverluste erzeugen. Daher ist ein Eintauchen dieser Verzahnungsteile und Lager in den Ölsumpf nicht schädlich.

Vorzugsweise sind die Prallbleche 92 und die Öl-Leitrinnen 93 an der Oberseite des Getriebegehäuses befestigt.

Die Ablassöffnungen sind derart in den Sammeltaschen 90 angeordnet und die Sammeltaschen sind derart ausgeführt, dass das beim Starten des Getriebes zuerst eintreffende Öl zur Schmierung der Lager oder Verzahnungsteile eingesetzt wird. Erst wenn der aufgefangene Ölstrom diesen zur Schmierung benötigten Ölstrom übersteigt, wird der Zwischenspeicher 80 befüllt.

Bei einem weiteren erfindungsgemäßen Ausführungsbeispiel weist der Zwischenspeicher 80 vorzugsweise einen einstellbaren Überlauf auf. Hierzu ist eine in Horizontalrichtung vorgesehene Ausnehmung in einer Seitenwand des Zwischenspeichers 80 vorsehbar, die von einem in Horizontalrichtung verschiebbar angeordneten Abdeckblechstück abdeckbar ist. Mittels Verschieben des Abdeckblechstücks ist somit die Überlaufhöhe und daher auch das maximale Volumen des Zwischenspeichers 80 einstellbar.

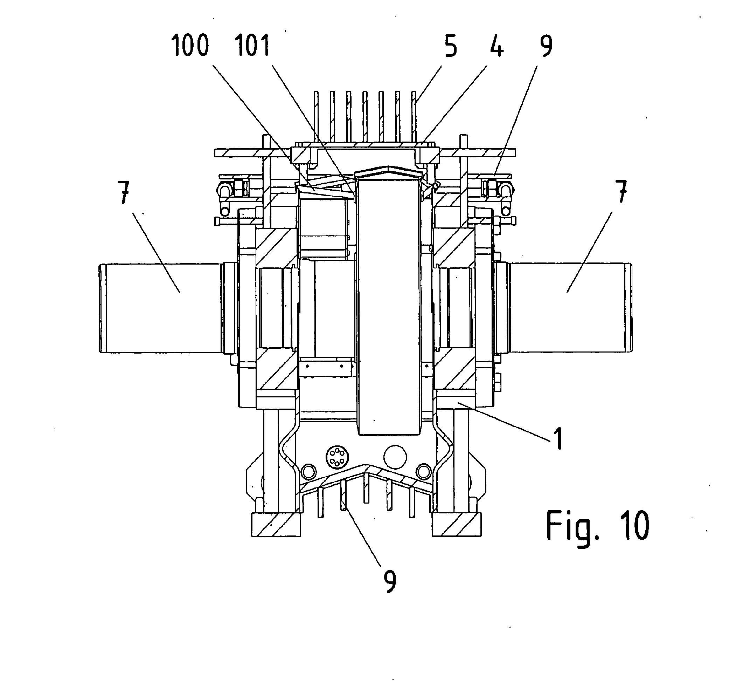

In der Figur 10 ist eine weitere Ölfördereinrichtung gezeigt, die einen Abstreifer 101 zeigt, welcher Öl an einer Stirnseite eines Zahnrades abstreift und in die Rohrleitung 100 drückt, aus welcher die seitlichen Sammeltaschen 90 mit befüllbar sind. Die vorbeschriebene ÖlFördereinrichtung, umfassend die Öl-Leitrinne 93 ist zusätzlich wirksam. Auf diese Weise ist also am Zahnrad anfahrendes und vom Zahnrad herumgespritztes Öl auffangbar und zur Schmierung von Lagern beziehungsweise Absenkung des Ölstandes im Betrieb verwendbar.

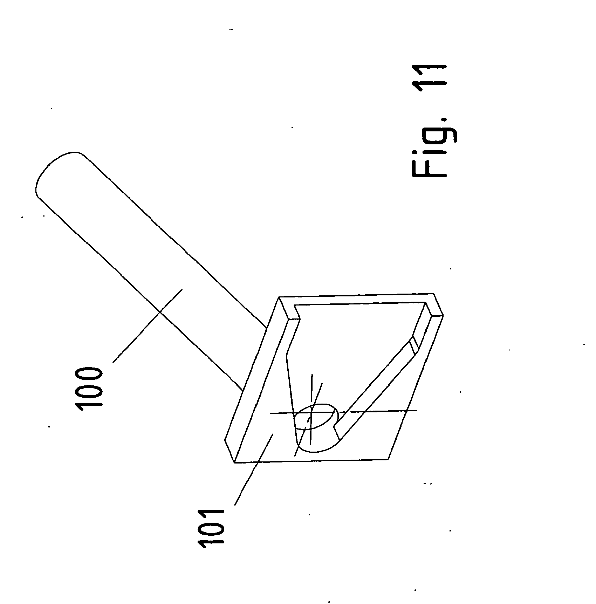

In Figur 11 ist der Abstreifer 101 mit Rohrleitung 100 separat gezeigt. Hierbei ist besser ersichtlich, dass der Abstreifer eine V-förmige Ausnehmung aufweist, an deren spitzen Ende ein Bohrloch vorgesehen ist, in welches die Rohrleitung 100 mündet.

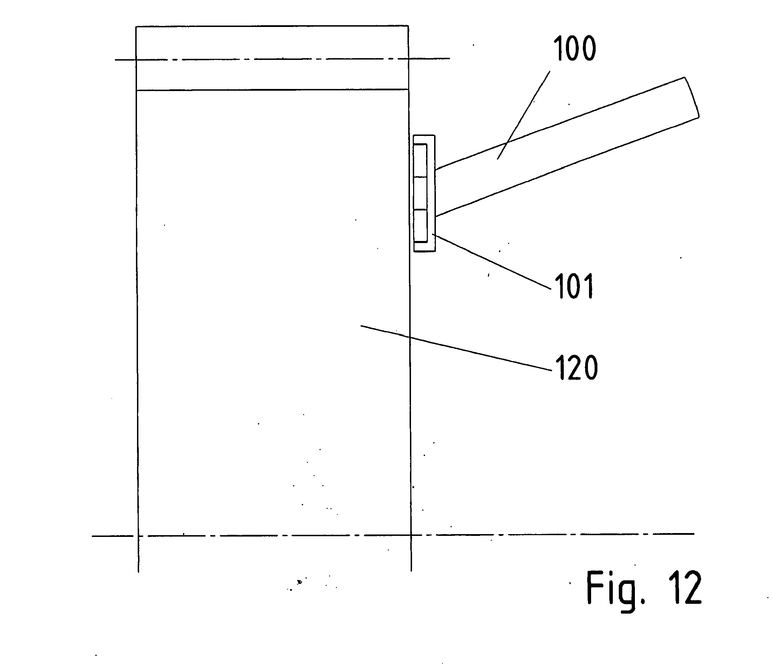

In Figur 12 ist die Anordnung des Abstreifers 101 am Zahnrad 120 gezeigt.

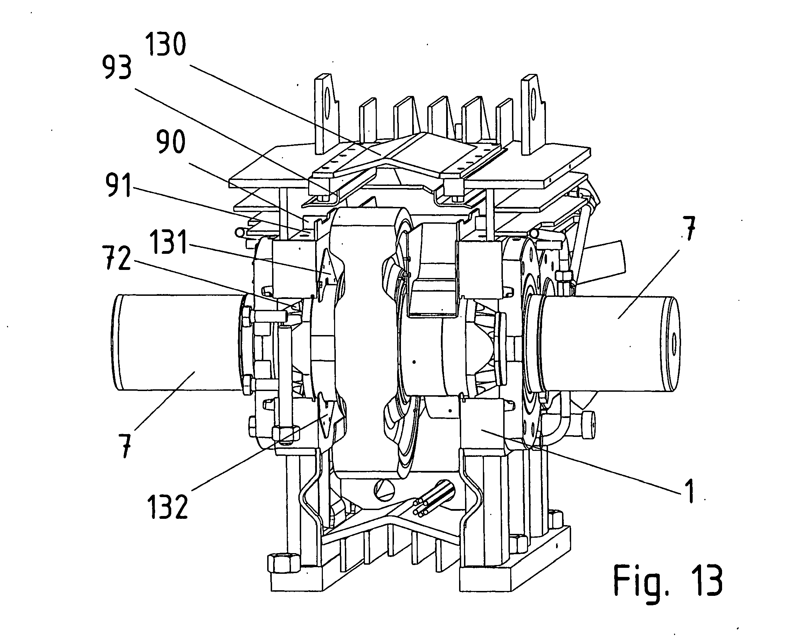

In Figur 13 ist ein anderes Getriebe gezeigt, bei dem im Unterschied zu den oben beschriebenen Figuren statt des Gehäusedeckels 4 ein Gehäusedeckel 130 vorgesehen ist, der dachförmig ausgestaltet ist. Somit ist abtropfendes Öl von der Innenseite dieses dachförmigen Gehäusedeckels mittels Öl-Leitrinnen 93 in die Sammeltaschen 90 ableitbar. Auf diese Weise ist also nicht wie beim Prallblech in Horizontalrichtung geschleudertes Öl sondern gegen die Innenseite des dachförmigen Gehäuseteils 130 in Vertikalrichtung geschleudertes Öl auffangbar und nutzbar.

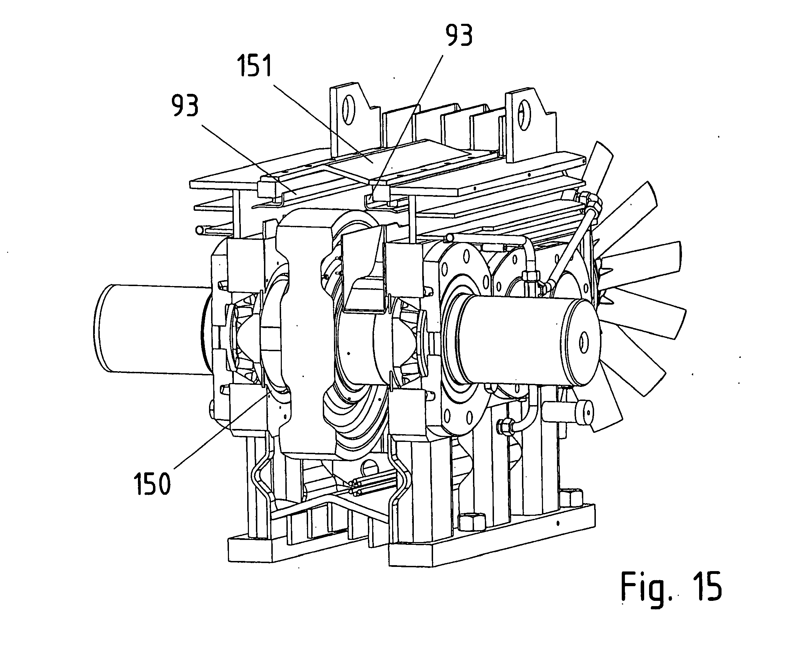

In der Figur 15 ist ein Gehäusedeckel 151 gezeigt, der V-förmig, also dachförmig, ausgeführt ist, wobei die Spitze des V nach oben weist. Dabei ist der Winkel des Dachbereichs, also der Winkel des jeweiligen Schenkels des V zur Horizontalen, größer als 10° ausgeführt. Vorzugsweise ist der Winkel derart gewählt, dass die ans Innere des dachförmigen Gehäusedeckels gespritzten Tropfen unter Schwerkrafteinfluss an der Dachschräge seitlich sich herunterbewegen, wobei sie adhäsiv an den Deckel gebunden sind, und dann in die Öl-Leitrinnen 93 abtropfen. Der Winkel ist also stets so gewählt, dass für adhäsiv an der Oberfläche anhaftende Tropfen die Gravitationskraft kleiner ist als die Adhäsivkraft. Dabei hängt der Winkel auch wesentlich von der Oberflächenspannung zwischen Öl und Gehäusedeckel 151 ab.

In Figur 13 ist auch das Schutzblech 131 gezeigt, welches zum Schutz von Kugellagern vor herumgespritztem Öl oder in Richtung Kugellager gedrängtem Ölschaum dient. Das Schutzblech 131 ist derart breit ausgeführt, dass sogar mehrere Kugellager schützbar sind, insbesondere das Kugellager der eintreibenden Welle, einer Zwischenwelle und/oder der Abtriebswelle 7. Das Schutzblech 131 ist an der Innenseite des Gehäuses befestigt und mit derart großen Ausnehmungen ausgeführt, dass die zu den jeweiligen Kugellagern entsprechend zugehörigen drehbar gelagerten Teile keine Berührung zum Schutzblech 131 In Figur 13 ist zwischen dem Zahnrad und dem zugehörigen Kugellager auf der Welle eine Distanzhülse angebracht zur Einhaltung eines definierten Abstandes zwischen Kugellager und Zahnrad. Somit ist die Distanzhülse in einer Ausnehmung des Schutzblechs 131 vorgesehen.

Das Schutzblech 131 weist einen Überlauf 132 auf, so dass Öl vom Ölsumpf In den Bereich der geschützt vorgesehenen Kugellager dann erfolgt, wenn der Ölstand des Ölsumpfes höher ist als der Überlauf, insbesondere also die Überlaufkante.

Das Schutzblech 131 ist mit der Innenseite des Gehäuses verschweißt oder verschraubt, so dass die Kugellager in Öl sich befinden. Insbesondere auch im Betrieb, wenn also der Ölstand im Ölsumpf absinkt, befindet sich noch ein Mindestölstand um das Kugellager herum. Weiter vorteilig ist hierbei auch, dass das den Verzahnungsteilen mittels der Fördereinrichtung zugeführte Öl sich ansammelt in dem Raumbereich um das Kugellager herum, der vom Schutzblech 131 zumindest teilweise begrenzt wird, wobei auch dann ein Abfließen des Öls vorgesehen ist, wenn der Mindestölstand um das Kugellager herum den Überlauf 132 überschreitet.

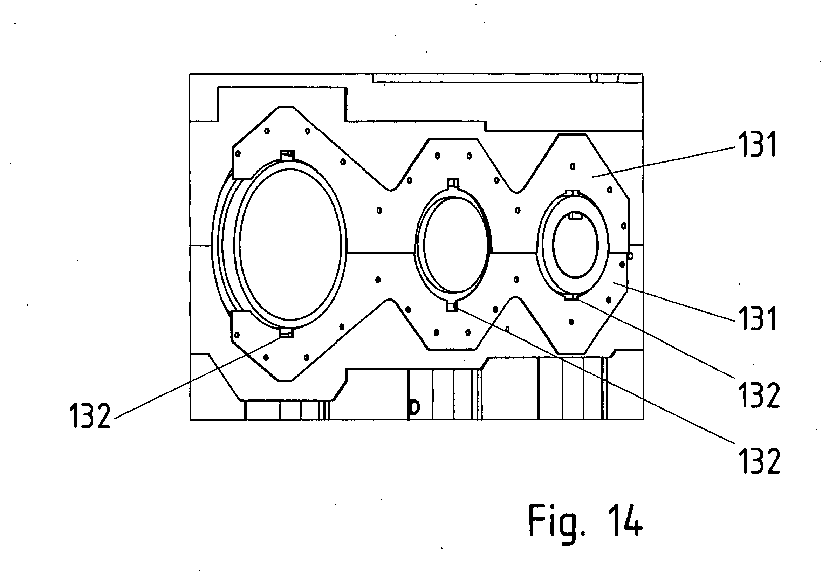

In Figur 14 ist die Ausführung mit Schutzblech 131 näher gezeigt. Hierbei ist ein unteres und ein oberes Schutzblech 131 verwendet, wobei das Gehäuse des Getriebes ebenfalls in ein unteres und ein oberes Gehäuseteil aufgeteilt ist. Dabei ist das untere Schutzblech 131 am unteren Gehäuseteil und das obere Schutzblech 131 am oberen Gehäuseteil befestigt, insbesondere angeschraubt, wie in Figur 14 gezeigt, oder angeschweißt, wie bei einem alternativen Ausführungsbeispiel.

Bei einem alternativen erfindungsgemäßen Ausführungsbeispiel wird statt des Schutzblechs 131 ein in einer Nut eingelegter Ring vorgesehen, der somit einen Überlauf definiert mittels des tiefsten umschlossenen Punktes. Der Ring ist dann nicht in der Lage, einen wesentlichen Spritzwasserschutz darzustellen, kann aber die Funktion des Überlaufes realisieren.

Bei einem weiteren erfindungsgemäßen Ausführungsbeispiel wird bei einem ersten Lager ein vorgenanntes Schutzblech und bei einem anderen Lager der vorgenannte Ring verwendet.

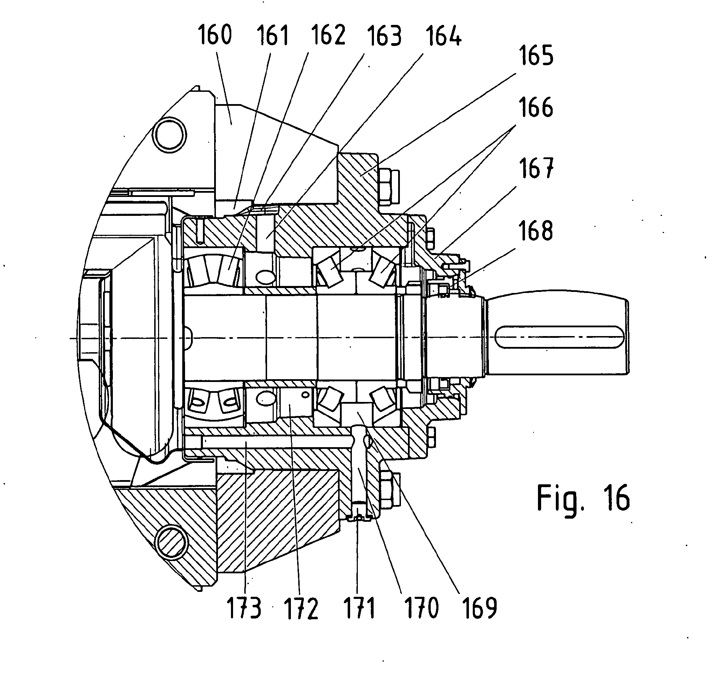

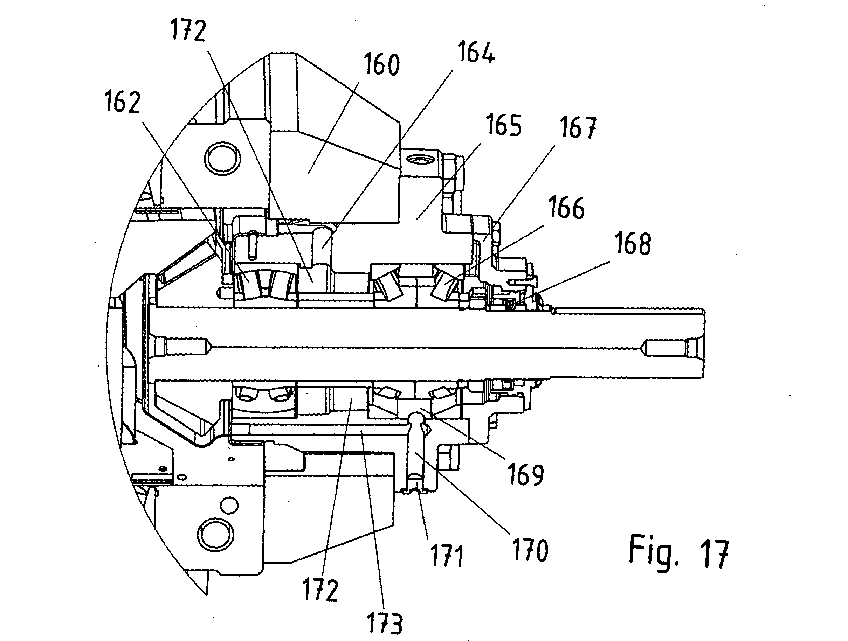

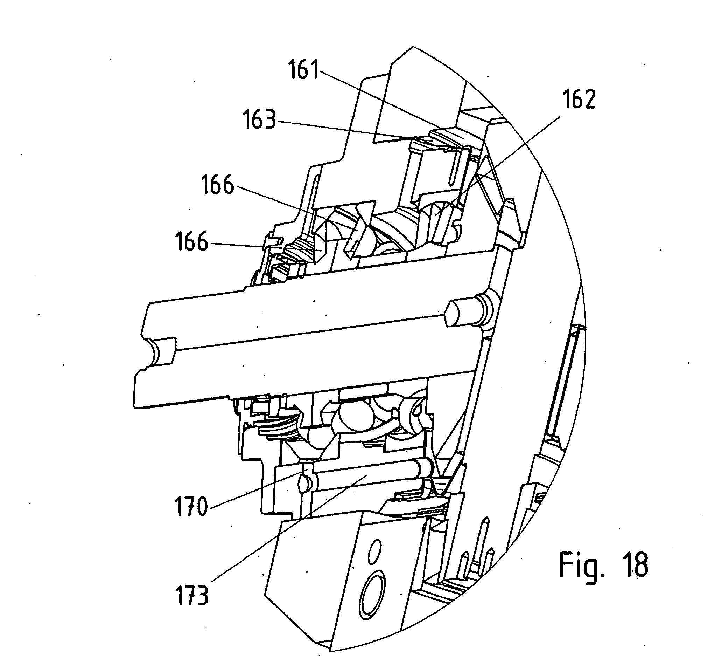

Im Ausführungsbeispiel nach den Figuren 16, 17 und 18 ist die eintreibende Wlnkelgetriebestufe näher gezeigt. Diese ist als Kegelgetriebestufe ausgeführt hierbei

An das Getriebegehäuse 160 ist am axialen Ende ein topfförmiges Gehäuseteil 165 angeschraubt vorgesehen, an dem wiederum ein Flanschteil 167 angeschraubt vorgesehen ist, das einen Wellendichtring 168 aufnimmt, der das Getriebeinnere gegen die äußere Umgebung abdichtet.

Im topfförmigen Gehäuseteil 165 sind zwei gegeneinander angestellte Kegelrollenlager 166 in X-Anordnung vorgesehen, deren voneinander axiale Beabstandung einen Zwischenraumbereich 169 verursacht. Dieser Zwischenraumbereich 169 ist also mittels der beiden Kegelrollenlager 166 und dem topfförmigen Gehäuseteil 165 begrenzt.

Bei Nicht-Betrieb des Getriebes und somit hohem Ölstand wird der Zwischenraumbereich 169 zumindest teilweise gefüllt mit Öl, da dieses vom Innenraum des Getriebes her in diesen einläuft. Bei Betrieb wird der Ölstand des Ölsumpfes im Getriebe abgesenkt. Die Entleerung des Zwischenraumbereichs 169 erfolgt über eine radiale Bohrung 170, die in den Zwischenraum 169 mündet und an ihrem äußeren radialen Ende verschlossen ist mittels eines Verschlussstopfens 171. Von der radialen Bohrung 170 führt eine axiale Bohrung 173 zurück in den Innenraum des Getriebes. Die Positionierung der Bohrungen, insbesondere die vorgesehene Höhe relativ zum Ölsumpf, ermöglicht einen definierten Mindestölstand im Zwischenraumbereich 169 einzuhalten. Die Entleerung des Zwischenraumbereiches 169 bis auf diesen Mindestölstand führt zu einer Verminderung von Verlusten, da die Lager dann weniger vom Öl umgeben sind.

Ein weiterer Zwischenraumbereich 172 zwischen dem axial weiter innen angeordneten Kegelrollenlager 166 und dem Pendelrollenlager 162, über die die eintreibende Welle im topfförmigen Gehäuseteil 165 gelagert ist, wird in analoger Weise geleert. Hierfür sind die radiale Bohrung 164 vorgesehen, die in einen axial nach innen führenden, zwischen dem Gehäuse 160 des Getriebes und dem topfförmigen Gehäuseteil 165 angeordneten Spalt 163 mündet, der sich nach weiter axial innen aufweitet in einen Spalt 161.

Die eintreibende Welle trägt an ihrem axial innen liegenden Endbereich das Kegelritzel, welches mit einem Kegelrad kämmt, das mittels im Gehäuse 160 des Getriebes vorgesehener Lager gelagert ist.

### Bezugszeichenliste

1 Gehäuseteil
2 Lüfterrad
3 Kühlrippen
4 Gehäusedeckel mit Kühlrippen
5 Kühlrippen des Gehäusedeckels 4
6 Kühlrippen am abgeschrägten Gehäuseteil
7 Abtriebswelle
8 abgeschrägter Gehäusebereich für Winkelgetriebestufe
9 Kühlrippen
41 Drehflanschteil, drehfest verbunden mit Abtriebswelle 7
42 Luftleit-Einhausung 50 Ableitungsrohr
51 Zuleitungsrohr
52 Plattenkühler
53 Ableitungsrohr
60 Zuleitungsrohr
61 Zuleitungsrohr
62 Ableitungsrohr
70 Betriebsniveau des Ölstandes
71 Stillstandsniveau des Ölstandes
72 Lager
73 Schale für Kegelrad
74 Schale für Kegelritzel
80 Zwischenspeicher
90 seitliche Sammeltaschen
91 Ablassöffnung zur Lagerschmierung
92 Prallblech
93 Öl-Leitrinne
100 Rohrleitung
101 Abstreifer
120 Zahnrad
130 dachförmiger Gehäusedeckel
131 Schutzblech
132 Überlauf
151 Gehäusedeckel
160 Getriebegehäuse
161 Spalt
162 Pendelrollenlager
163 Spalt
164 Bohrung
165 Gehäuseteil, topfförmig
166 gegeneinander angestellte Kegelrollenlager in X-Anordnung
167 Flanschteil
168 Wellendichtring
169 Zwischenraumbereich zwischen beiden Kegelrollenlagern
170 Bohrung, radial
171 Verschlussstopfen
172 Zwischenraumbereich
173 Bohrung, axial.

## Patentansprüche

1. Getriebe,
wobei als Mittel zur Absenkung des Betriebs-Ölstandes des Ölsumpfes des Getriebes ein Zwischenspeicher (80) vorgesehen ist, dem Öl aus dem Ölsumpf des Getriebes zuführbar ist,
wobei eine Öl-Abstreifvorrichtung an einem planen Bereich der Stirnseite eines drehbar gelagerten Zahnrades (120) angeordnet ist,
**dadurch gekennzeichnet, dass**
die Öl-Abstreifvorrichtung eine in Umfangsrichtung,
sich verjüngende Ausnehmung, umfasst, an dessen Endbereich eine Rohrleitung (100) vorgesehen ist in welche das abgestreifte Öl hineindrückbar ist, wobei die Rohrleitung (100) aufwärts gerichtet angeordnet ist,
wobei das obere Ende der an der Öl-Abstreifvorrichtung angeordneten Rohrleitung (100) zum Herausführen des Öls aus dem Innenraum des Getriebes mit dem Zwischenspeicher (80) verbunden ist.

2. Getriebe nach Anspruch 1,
**dadurch gekennzeichnet, dass**
der Zwischenspeicher (80) im Innenraum des Getriebes angeordnet Ist, also vom Getriebegehäuse gehäusebildend umgeben ist

3. Getriebe nach mindestens einem der vorangegangenen Ansprüche,
**dadurch gekennzeichnet, dass**
die Ausnehmung nur zur Stirnseite des Zahnrades (120) hin, und entgegen der Umfangsrichtung sowie zum Endbereich der Rohrleitung (100) hin geöffnet ist.

4. Getriebe nach mindestens einem der vorangegangenen Ansprüche,
**dadurch gekennzeichnet, dass**.
die an der Öl-Abstreifvorrichtung angeordnete Rohrleitung (100) aufwärts verläuft.

5. Getriebe nach mindestens einem der vorangegangenen Ansprüche,
**dadurch gekennzeichnet, dass**
eine Fördereinrichtung die Öl-Abstreifvorrichtung umfasst, die Öl von der Stirnseite eines drehenden Zahnrades (120) abstreifbar macht und das abgestreifte Öl durch eine Rohrleitung (100) dem Zwischenspeicher (80) zuführbar macht,
wobei die Rohrleitung (100) aufwärts gerichtet angeordnet ist.

6. Getriebe nach mindestens einem der vorangegangenen Ansprüche,
**dadurch gekennzeichnet, dass**
das Zahnrad (120) zumindest teilweise im Ölsumpf eingetaucht angeordnet ist.

7. Getriebe nach mindestens einem der vorangegangenen Ansprüche,
**dadurch gekennzeichnet, dass**
die Öl-Abstreifvorrichtung oberhalb des Ölsumpfes angeordnet ist.

8. Getriebe nach mindestens einem der vorangegangenen Ansprüche,
**dadurch gekennzeichnet, dass**
die Fördereinrichtung Bohrungen im Getriebegehäuse umfasst.

9. Getriebe nach mindestens einem der vorangegangenen Ansprüche,
**dadurch gekennzeichnet, dass**
Fördereinrichtung Öl aus dem Innenraum des Getriebes durch eine Rohrleitung (100) fördert, welche an der Außenseite des Getriebes befestigt ist.

10. Getriebe nach mindestens einem der vorangegangenen Ansprüche,
**dadurch gekennzeichnet, dass**
die Rohrleitung (100) das Öl zurückführt in den Innenraum des Getriebes.

11. Getriebe nach mindestens einem der vorangegangenen Ansprüche,
**dadurch gekennzeichnet, dass**
die Rohrleitung (100) an der Außenseite des Getriebes ein Gefälle aufweist,
wobei das Öl aus einer im Innenraum des Getriebes angeordneten Sammelvorrichtung, wie Zwischenspeicher (80), durch die Rohrleitung (100) nach außen und von dort wieder zurück in den Ölsumpf fließt,
wobei die Sammelvorrichtung oberhalb des Ölsumpfes angeordnet ist.

12. Getriebe nach mindestens einem der vorangegangenen Ansprüche,
**dadurch gekennzeichnet, dass**
die an der Außenseite vorgesehene Rohrleitung (100) einem Plattenkühler (52) Öl zuleitet und ein anderes Stück der Rohrleitung (100) Öl aus dem Plattenkühler (52) zurückleitet in den Ölsumpf im Innenraum des Getriebes,
und dass
der Plattenkühler (52) an der Außenseite des Getriebes befestigt ist und im Kühlluftstrom angeordnet ist.

13. Getriebe nach mindestens einem der vorangegangenen Ansprüche,
**dadurch gekennzeichnet, dass**
der Zwischenspeicher (80) als Gefäß ausgeführt ist, das derartige Ausnehmungen aufweist, dass er entleerbar ist durch diese Ausnehmungen.
und dass
der Zwischenspeicher (80) einen höhenverstellbaren Überlauf, aufweist, über den überschüssiges Öl in den Ölsumpf abführbar ist
und dass
die Fördereinrichtung ein Prallblech (92) zum Auffangen von Öl aufweist, wobei vom Prallblech (92) abtropfendes Öl über eine Sammelrinne dem Zwischenspeicher (80) zuführbar ist
und dass
die Sammelrinne eine Ausnehmung aufweist, in die eine Leitung mündet, aus der eine Verzahnung schmierbar ist.

14. Getriebe nach mindestens einem der vorangegangenen Ansprüche,
**dadurch gekennzeichnet, dass**
die Ablaufrinne gekrümmt ausgeführt ist, so dass ein erster Teil des vom Prallblech (92) getropften und von der Ablaufrinne aufgefangenen Öls in eine erste Sammelrinne und ein
zweiter Teil des vom Prallblech (92) abgetropften und von der Ablaufrinne aufgefangenen Öls in eine zweite Sammelrinne fließt, wobei der Zwischenspeicher (80) aus den Sammelrinnen befüllbar ist und die Sammelrinnen axial seitlich von einem Zahnrad (120) des Getriebes angeordnet sind

15. Getriebe nach mindestens einem der vorangegangenen Ansprüche,
**dadurch gekennzeichnet, dass**
zumindest ein Teilbereich eines Verzahnungsteils des Getriebes von einer Schale (73) umgeben ist, so dass ein Abspritzen von Öl nur nach oben ermöglicht ist, wobei die Schale (73) an ihrer Unterseite eine Ausnehmung aufweist, so dass ein Befüllen der Schale (73) aus dem Ölsumpf ermöglicht ist.

## Claims

1. A transmission,
wherein an intermediate store (80) is provided as means to lower the operating oil level of the oil sump of the transmission, to which store oil can be supplied from the oil sump of the transmission,
wherein an oil scraper device is arranged on a planar region of the end face of a rotatably mounted gear wheel (120),
**characterised in that**
the oil scraper device comprises a cutout which tapers in the peripheral direction, on the end region of which a pipe (100) is provided, into which the scraped-off oil can be forced, the pipe (100) being arranged directed upwards,
the upper end of the pipe (100) arranged on the oil scraper device being connected to the intermediate store (80) to guide the oil out of the interior of the transmission.

2. A transmission according to Claim 1, **characterised in that** the intermediate store (80) is arranged in the interior of the transmission, i.e. is surrounded in housing-forming manner by the transmission housing.

3. A transmission according to at least one of the preceding claims, **characterised in that** the cutout is open only towards the end face of the gear wheel (120), and counter to the peripheral direction and towards the end region of the pipe (100).

4. A transmission according to at least one of the preceding claims, **characterised in that** the pipe (100) arranged on the oil scraper device extends upwards.

5. A transmission according to at least one of the preceding claims, **characterised in that** a conveying means comprises the oil scraper device which makes oil able to be scraped off from the end face of a rotating gear wheel (120) and makes the scraped-off oil able to be supplied to the intermediate store (80) through a pipe (100), the pipe (100) being arranged directed upwards.

6. A transmission according to at least one of the preceding claims, **characterised in that** the gear wheel (120) is arranged immersed at least partially in the oil sump.

7. A transmission according to at least one of the preceding claims, **characterised in that** the oil scraper device is arranged above the oil sump.

8. A transmission according to at least one of the preceding claims, **characterised in that** the conveying means comprises bores in the transmission casing.

9. A transmission according to at least one of the preceding claims, **characterised in that** [the] conveying means conveys oil out of the interior of the transmission through a pipe (100) which is fastened to the outside of the transmission.

10. A transmission according to at least one of the preceding claims, **characterised in that** the pipe (100) returns the oil into the interior of the transmission.

11. A transmission according to at least one of the preceding claims, **characterised in that** the pipe (100) on the outside of the transmission has a downward slope, the oil flowing out of a collecting device, such as intermediate store (80), arranged in the interior of the transmission through the pipe (100) to the outside and thence back again into the oil sump,
the collecting device being arranged above the oil sump.

12. A transmission according to at least one of the preceding claims, **characterised in that** the pipe (100) provided on the outside feeds oil to a plate cooler (52) and another piece of the pipe (100) feeds oil back out of the plate cooler (52) into the oil sump in the interior of the transmission,
and **in that**
the plate cooler (52) is fastened to the outside of the transmission and is arranged in the stream of cooling air.

13. A transmission according to at least one of the preceding claims, **characterised in that** the intermediate store (80) is embodied as a vessel which has such cutouts that it can be emptied through these cutouts,
and **in that** the intermediate store (80) has a vertically adjustable overflow via which excess oil can be carried off into the oil sump,
and **in that**
the conveying means has a baffle plate (92) for collecting oil, with oil dripping off the baffle plate (92) being able to be supplied to the intermediate store (80) via a collecting channel
and **in that**
the collecting channel has a cutout into which a line opens from which toothing can be lubricated.

14. A transmission according to at least one of the preceding claims, **characterised in that** the discharge channel is embodied curved, so that a first part of the oil which has dripped from the baffle plate (92) and has been collected by the discharge channel flows into a first collecting channel and a second part of the oil which has dripped from the baffle plate (92) and has been collected by the discharge channel flows into a second collecting channel, the intermediate store (80) being able to be filled from the collecting channels and the collecting channels being arranged axially laterally to a gear wheel (120) of the transmission.

15. A transmission according to at least one of the preceding claims, **characterised in that** at least one partial region of a toothed part of the transmission is surrounded by a shell (73), so that splashing of oil is permitted only upwards, the shell (73) having on its underside a cutout, so that filling of the shell (73) from the oil sump is made possible.

## Revendications

1. Transmission
dans laquelle un accumulateur intermédiaire (80), prévu en tant que moyen conçu pour abaisser le niveau d'huile en service dans le carter d'huile de la transmission, peut recevoir de l'huile en provenance dudit carter d'huile de ladite transmission,
un dispositif de raclement d'huile étant implanté dans une région plane de la face extrême d'une roue dentée (120) montée à rotation,
**caractérisée par le fait que**
le dispositif de raclement d'huile présente un évidement se rétrécissant dans le sens périphérique et dans la région extrême duquel est prévu un conduit tubulaire (100) dans lequel l'huile raclée peut être introduite sous pression, ledit conduit tubulaire (100) étant orienté vers le haut,
l'extrémité supérieure dudit conduit tubulaire (100), situé sur ledit dispositif de raclement d'huile, étant raccordée à l'accumulateur intermédiaire (80) en vue d'extraire l'huile de l'espace intérieur de la transmission.

2. Transmission selon la revendication 1,
**caractérisée par le fait que**
l'accumulateur intermédiaire (80) est logé dans l'espace intérieur de ladite transmission, c'est-à-dire entouré par la boîte d'engrenage en formant une enveloppe.

3. Transmission selon au moins l'une des revendications précédentes, **caractérisée par le fait que**
l'évidement est ouvert uniquement en direction de la face extrême de la roue dentée (120) et à l'opposé du sens périphérique, ainsi qu'en direction de la région extrême du conduit tubulaire (100).

4. Transmission selon au moins l'une des revendications précédentes, **caractérisée par le fait que**
le conduit tubulaire (100), situé sur le dispositif de raclement d'huile, s'étend vers le haut.

5. Transmission selon au moins l'une des revendications précédentes, **caractérisée par le fait**
**qu'**un système de refoulement inclut le dispositif de raclement d'huile qui permet de racler de l'huile depuis la face extrême d'une roue dentée rotative (120) et qui permet de délivrer l'huile raclée à l'accumulateur intermédiaire (80) au moyen d'un conduit tubulaire (100), ledit conduit tubulaire (100) étant orienté vers le haut.

6. Transmission selon au moins l'une des revendications précédentes, **caractérisée par le fait que**
la roue dentée (120) est au moins partiellement immergée dans le carter d'huile.

7. Transmission selon au moins l'une des revendications précédentes, **caractérisée par le fait que**
le dispositif de raclement d'huile est situé au-dessus du carter d'huile.

8. Transmission selon au moins l'une des revendications précédentes, **caractérisée par le fait que**
le système de refoulement comprend des alésages pratiqués dans la boîte d'engrenage.

9. Transmission selon au moins l'une des revendications précédentes, **caractérisée par le fait que**
le système de refoulement refoule de l'huile hors de l'espace intérieur de ladite transmission par l'intermédiaire d'un conduit tubulaire (100) fixé à la face extérieure de ladite transmission.

10. Transmission selon au moins l'une des revendications précédentes, **caractérisée par le fait que**
le conduit tubulaire (100) réintroduit l'huile dans l'espace intérieur de ladite transmission.

11. Transmission selon au moins l'une des revendications précédentes, **caractérisée par le fait que**
le conduit tubulaire (100) décrit une pente à la face extérieure de ladite transmission, sachant que l'huile s'écoule à partir d'un dispositif collecteur tel qu'un accumulateur intermédiaire (80) logé dans l'espace intérieur de ladite transmission, emprunte ledit conduit tubulaire (100) pour gagner l'extérieur et, de là, retourne dans le carter d'huile, ledit dispositif collecteur étant situé au-dessus dudit carter d'huile.

12. Transmission selon au moins l'une des revendications précédentes, **caractérisée par le fait que**
le conduit tubulaire (100), prévu à la face extérieure, dirige de l'huile vers un refroidisseur à plaques (52) et un autre tronçon dudit conduit tubulaire (100) renvoie de l'huile, à partir dudit refroidisseur à plaques (52), dans le carter d'huile situé dans l'espace intérieur de ladite transmission ;
et **par le fait que**
ledit refroidisseur à plaques (52) est fixé à la face extérieure de ladite transmission et se trouve dans le courant d'air de refroidissement.

13. Transmission selon au moins l'une des revendications précédentes, **caractérisée par le fait que**
l'accumulateur intermédiaire (80) est réalisé sous la forme d'un récipient comportant des évidements tels qu'il puisse être vidé à l'aide de ces évidements ;
**par le fait que**
ledit accumulateur intermédiaire (80) est pourvu d'un trop-plein réglable en hauteur, au moyen duquel de l'huile excédentaire peut être évacuée vers le carter d'huile ;
**par le fait que**
le système de refoulement présente une tôle déflectrice (92) conçue pour recueillir de l'huile, de l'huile dégouttant de ladite tôle déflectrice (92) pouvant être dirigée vers ledit accumulateur intermédiaire (80) au moyen d'une rigole collectrice ;
et **par le fait que**
ladite rigole collectrice est munie d'un évidement dans lequel débouche un conduit à partir duquel une denture peut être lubrifiée.

14. Transmission selon au moins l'une des revendications précédentes, **caractérisée par le fait que**
la rigole d'écoulement est de réalisation courbe, de telle sorte qu'une première partie de l'huile dégouttant de la tôle déflectrice (92) et recueillie par la rigole d'écoulement afflue dans une première rigole collectrice, et qu'une seconde partie de l'huile dégouttant de ladite tôle déflectrice (92) et recueillie par ladite rigole d'écoulement afflue dans une seconde rigole collectrice, l'accumulateur intermédiaire (80) pouvant être rempli à partir des rigoles collectrices, et lesdites rigoles collectrices flanquant axialement une roue dentée (120) de ladite transmission.

15. Transmission selon au moins l'une des revendications précédentes, **caractérisée par le fait**
**qu'**au moins une région partielle d'une partie dentée de ladite transmission est entourée d'une coque (73), de telle sorte qu'une éclaboussure d'huile soit autorisée uniquement vers le haut,
sachant que la coque (73) est munie d'un évidement à sa face inférieure, autorisant ainsi un remplissage de ladite coque (73) à partir du carter d'huile.
